(19) Europäisches Patentamt / European Patent Office / Office européen des brevets

(11) **EP 4 642 107 A2**

(12) **EUROPEAN PATENT APPLICATION**

(43) Date of publication:
**29.10.2025 Bulletin 2025/44**

(21) Application number: **25201953.4**

(22) Date of filing: **07.06.2023**

(51) International Patent Classification (IPC):
**H04W 52/02** $^{(2009.01)}$

(52) Cooperative Patent Classification (CPC):
**H02J 50/001; H02J 50/20; H02J 50/40; H02J 50/80;** H02J 2310/60

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.07.2022 GR 20220100609**

(62) Document number(s) of the earlier application(s) in accordance with Art. 76 EPC:
**23736580.4 / 4 562 739**

(71) Applicant: **QUALCOMM Incorporated**
**San Diego, CA 92121-1714 (US)**

(72) Inventors:
- **ELSHAFIE, Ahmed**
  **San Diego, 92121-1714 (US)**
- **ABOTABL, Ahmed Attia**
  **San Diego, 92121-1714 (US)**
- **KIM, Yuchul**
  **San Diego, 92121-1714 (US)**

- **HE, Linhai**
  **San Diego, 92121-1714 (US)**
- **XU, Huilin**
  **San Diego, 92121-1714 (US)**
- **MANOLAKOS, Alexandros**
  **San Diego, 92121-1714 (US)**
- **CHEN, Wanshi**
  **San Diego, 92121-1714 (US)**
- **GAAL, Peter**
  **San Diego, 92121-1714 (US)**
- **HOSSEINI, Seyedkianoush**
  **San Diego, 92121-1714 (US)**
- **WU, Zhikun**
  **San Diego, 92121-1714 (US)**

(74) Representative: **Tomkins & Co**
**5 Dartmouth Road**
**Dublin 6, D06 F9C7 (IE)**

Remarks:
This application was filed on 12.09.2025 as a divisional application to the application mentioned under INID code 62.

(54) **TIME-DOMAIN BEHAVIOR AND ENERGY REQUEST INDICATIONS FOR ENERGY HARVESTING DEVICES**

(57) Methods, systems, and devices for wireless communications are described. An energy harvesting (EH) user equipment (UE) may transmit a first indication of a time duration to perform an EH procedure with an energy transmitter (ET) UE, and transmit a second indication of a set of time offsets, associated with operation modes of the EH UE. The ET UE may transmit an indication of an energy transmission capability identifying a first quantity of energy that the ET UE may provide to one or more EH UEs in a time duration of an EH procedure. The ET UE may receive an energy request message indicating a time duration to perform the EH procedure and second quantity of energy for the energy harvesting procedure for the EH UE. The EH UE and ET UE may perform the EH procedure in accordance with the communicated capability messages.

EP 4 642 107 A2

FIG. 2

**Description**

CROSS REFERENCE

The present Application for Patent claims the benefit of Greece Patent Application No. 20220100609 by ELSHAFIE et al., entitled "TIME-DOMAIN BEHAVIOR AND ENERGY REQUEST INDICATIONS FOR ENERGY HARVESTING DEVICES," filed July 27, 2022, which is assigned to the assignee hereof and expressly incorporated by reference herein.

FIELD OF TECHNOLOGY

The following relates to wireless communications, including time-domain behavior and energy request indications for energy harvesting (EH) devices.

BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations, each supporting wireless communication for communication devices, which may be known as user equipment (UE).

SUMMARY

The described techniques relate to improved methods, systems, devices, and apparatuses that support time-domain behavior and energy request indications for energy harvesting (EH) devices (which may also be or be referred to as energy receiver devices herein). For example, the described techniques provide for a network to prioritize the charging of a set EH user equipments (UEs) using a set of energy transmitter (ET) UEs (which may also be or be referred to as energy transmitter devices herein). For example, an EH UE may indicate multiple time offsets (e.g., each including a number of slots) where each offset may be associated with an EH UE behavior. In some examples, the EH UE may indicate the multiple time offsets directly to one or more ET UEs or to a network entity associated with the one or more ET UEs. Additionally, or alternatively, the EH UE may indicate a timing limit that indicates a time interval in which the EH UE requests to receive an amount energy from an ET UE. In some examples, the network entity may configure an ET UE via radio resource control (RRC) signaling with a charging scheme in cases where the ET UE receives multiple charging requests from multiple EH UEs. For example, if an ET UE concurrently receives EH requests from two EH UEs such that both EH requests may be satisfied within the respective time interval indicated by each EH UE, the ET UE prioritize the order of charging based on which EH requests a greater energy, has a lower request time interval, or a combination thereof.

In some cases, the ET UE may report an energy capability message to the network entity that indicates an energy budget that the ET UE may allocate over a duration of time. For example, the ET UE can indicate how many energy requests it may serve during a configured time duration and how many units of energy the ET UE may provide for each request. As such, the ET UE may receive one or more energy requests such that the aggregate energy requested satisfies the energy budget of the ET UE.

A method for wireless communications at an energy receiver device is described. The method may include transmitting a first indication of a time duration for the energy receiver device to perform an EH procedure with an ET device, transmitting a second indication of a set of time offsets, each time offset of the set of time offsets associated with an operation mode of a set of operation modes of the energy receiver device, and performing the EH procedure during the time duration in accordance with the set of time offsets and associated operation modes of the set of operation modes.

An apparatus for wireless communications at an energy receiver device is described. The apparatus may include a processor, memory coupled (e.g., operatively, communicatively, functionally, electronically, or electrically) with the processor, and instructions stored in the memory. The instructions may be executable by the processor to cause the apparatus to transmit a first indication of a time duration for the energy receiver device to perform an EH procedure with an ET device, transmit a second indication of a set of time offsets, each time offset of the set of time offsets associated with an operation mode of a set of operation modes of the energy receiver device, and perform the EH procedure during the time duration in accordance with the set of time offsets and associated operation modes of the set of operation modes.

Another apparatus for wireless communications at an energy receiver device is described. The apparatus may include means for transmitting a first indication of a time duration for the energy receiver device to perform an EH procedure with an ET device, means for transmitting a second indication of a set of time offsets, each time offset of the set of time offsets associated with an operation mode of a set of operation modes of the energy receiver device, and means for performing the EH procedure during the time duration in accordance with the set of time offsets and associated operation modes of the set of operation modes.

A non-transitory computer-readable medium storing code for wireless communications at an energy receiver device is described. The code may include instructions executable by a processor to transmit a first indication of a time duration for the energy receiver device to perform an EH procedure with an ET device, transmit a second indication of a set of time offsets, each time offset of the set of time offsets associated with an operation mode of a set of operation modes of the energy receiver device, and perform the EH procedure during the time duration in accordance with the set of time offsets and associated operation modes of the set of operation modes.

Some examples of the method, apparatuses, and non-transitory computer-readable medium described herein may further include operations, features, means, or instructions for transmitting the first indication and the second indication in one EH request message.

In some examples of the method, apparatuses, and non-transitory computer-readable medium described herein, transmitting the first indication of the time duration may include operations, features, means, or instructions for transmitting a time duration threshold that identifies a maximum duration of time for the energy receiver device to perform the EH procedure.

In some examples of the method, apparatuses, and non-transitory computer-readable medium described herein, the time duration threshold indicates a quantity of slots, minislots, symbols, subframes, frames, seconds, or any combination thereof.

Some examples of the method, apparatuses, and non-transitory computer-readable medium described herein may further include operations, features, means, or instructions for retransmitting the first indication based on not receiving a response to the first indication during a configured threshold.

Some examples of the method, apparatuses, and non-transitory computer-readable medium described herein may further include operations, features, means, or instructions for receiving a message indicating that the ET device rejected to perform the EH procedure and retransmitting the first indication of the time duration for the energy receiver device to perform the EH procedure with a second ET device in response to receiving the message.

Some examples of the method, apparatuses, and non-transitory computer-readable medium described herein may further include operations, features, means, or instructions for transmitting a third indication of a first operation mode of the energy receiver device applicable at the energy receiver device before the time duration and a second operation mode applicable at the energy receiver device after the time duration.

Some examples of the method, apparatuses, and non-transitory computer-readable medium described herein may further include operations, features, means, or instructions for receiving an indication of a maximum quantity of requests for the EH procedure with the ET device.

A method for wireless communications at an ET device is described. The method may include transmitting an indication of an energy transmission capability of the ET device, the energy transmission capability identifying a first quantity of energy that the ET device is able to provide to one or more energy receiver devices in a time duration of an EH procedure, receiving an energy request message indicating a time associated with the time duration to perform the EH procedure and second quantity of energy for the EH procedure for an energy receiver device, the second quantity of energy based on the first quantity of energy identified by the energy transmission capability of the ET device, and performing, in response to receiving the energy request message, the EH procedure with the energy receiver device according to the second quantity of energy.

An apparatus for wireless communications at an ET device is described. The apparatus may include a processor, memory coupled (e.g., operatively, communicatively, functionally, electronically, or electrically) with the processor, and instructions stored in the memory. The instructions may be executable by the processor to cause the apparatus to transmit an indication of an energy transmission capability of the ET device, the energy transmission capability identifying a first quantity of energy that the ET device is able to provide to one or more energy receiver devices in a time duration of an EH procedure, receive an energy request message indicating a time associated with the time duration to perform the EH procedure and second quantity of energy for the EH procedure for an energy receiver device, the second quantity of energy based on the first quantity of energy identified by the energy transmission capability of the ET device, and perform, in response to receiving the energy request message, the EH procedure with the energy receiver device according to the second quantity of energy.

Another apparatus for wireless communications at an ET device is described. The apparatus may include means for transmitting an indication of an energy transmission capability of the ET device, the energy transmission capability identifying a first quantity of energy that the ET device is able to provide to one or more energy receiver devices in a time duration of an EH procedure, means for receiving an energy request message indicating a time associated with the time duration to perform the EH procedure and second quantity of energy for the EH procedure for an energy receiver device, the second quantity of energy based on the first quantity of energy identified by the energy transmission capability of the ET device, and means for performing, in response to receiving the energy request message, the EH procedure with the energy receiver device according to the second quantity of energy.

A non-transitory computer-readable medium storing code for wireless communications at an ET device is described. The code may include instructions executable by a processor to transmit an indication of an energy transmission capability of the ET device, the energy transmission capability identifying a first quantity of energy that the ET device is able to provide to one or more energy receiver devices in a time duration of an EH procedure, receive an energy request message indicating a time associated with the time duration to perform the EH procedure and second quantity of energy for the EH procedure for an energy receiver device, the second quantity of energy based on the first quantity of energy identified by the energy transmission capability of the ET device, and perform, in response to receiving the energy request message, the EH procedure with the energy receiver device according to the second quantity of energy.

Some examples of the method, apparatuses, and non-transitory computer-readable medium described herein may further include operations, features, means, or instructions for receiving a control signal indicating a procedure for performing a set of multiple EH procedures for conflicting energy request messages.

Some examples of the method, apparatuses, and non-transitory computer-readable medium described herein may further include operations, features, means, or instructions for receiving a first energy request message for a first energy receiver device indicating a third quantity of energy and a first time duration to perform a first EH procedure, receiving a second energy request message for a second energy receiver device indicating a fourth quantity of energy and a second time duration to perform a second EH procedure, where the first time duration and the second time duration at least partially overlap in time, performing the first EH procedure over the first time duration with the first energy receiver device in accordance with the procedure, and performing the second EH procedure over the second time duration with the second energy receiver device in accordance with the procedure.

In some examples of the method, apparatuses, and non-transitory computer-readable medium described herein, a sum of the third quantity of energy and the fourth quantity of energy may be less than or equal to the first quantity of energy, and a sum of the first time duration and the second time duration may be less than or equal to the time duration.

In some examples of the method, apparatuses, and non-transitory computer-readable medium described herein, the procedure for performing EH procedures for conflicting energy request messages indicates to prioritize the EH procedures based on a quantity of energy requested and an associated time duration for each respective EH procedure of the set of multiple EH procedures.

Some examples of the method, apparatuses, and non-transitory computer-readable medium described herein may further include operations, features, means, or instructions for receiving a second EH request message indicating a second time at least partially outside the time duration to perform the EH procedure.

Some examples of the method, apparatuses, and non-transitory computer-readable medium described herein may further include operations, features, means, or instructions for transmitting a message rejecting the second EH request message based on the second time being at least partially outside the time duration.

Some examples of the method, apparatuses, and non-transitory computer-readable medium described herein may further include operations, features, means, or instructions for performing in response to receiving the second EH request message a partial EH procedure in accordance with the second time being at least partially outside the time duration.

Some examples of the method, apparatuses, and non-transitory computer-readable medium described herein may further include operations, features, means, or instructions for receiving, from a network entity at least in part in response to the energy transmission capability, a control message identifying a configured quantity of energy for the ET device that may be less than or equal to the first quantity of energy.

Some examples of the method, apparatuses, and non-transitory computer-readable medium described herein may further include operations, features, means, or instructions for receiving an update to the configured quantity of energy based on a battery status of the ET device, an operation mode of the ET device, or both.

In some examples of the method, apparatuses, and non-transitory computer-readable medium described herein, transmitting the indication of the energy transmission capability may include operations, features, means, or instructions for transmitting an indication of a quantity of EH procedures that can be performed during the time duration and a quantity of energy for each of the quantity of EH procedures.

In some examples of the method, apparatuses, and non-transitory computer-readable medium described herein, the second quantity of energy indicated in the energy request message may be based on the ET device indicating the quantity of energy for each of the quantity of EH procedures.

Some examples of the method, apparatuses, and non-transitory computer-readable medium described herein may further include operations, features, means, or instructions for transmitting an update to the energy transmission capability, the update changing the first quantity of energy that the ET device may be able to provide to the one or more energy receiver devices in a second time duration of the EH procedure.

In some examples of the method, apparatuses, and non-transitory computer-readable medium described herein, the EH procedure may be multiplexed with a data transmission.

In some examples of the method, apparatuses, and non-transitory computer-readable medium described herein, the first quantity of energy that the ET device may be able to provide to the one or more energy receiver devices may be based on one or more radio frequency (RF) spectrum bands associated with the ET device, one or more carriers associated with the ET device, a waveform type used for the EH procedure, or any combination thereof.

A method for wireless communications at a wireless device is described. The method may include receiving a first indication of a time duration for an energy receiver device to perform an EH procedure with an ET device and receiving a second indication of a set of time offsets, each time offset of the set of time offsets associated with an operation mode of a set of operation modes of the energy receiver device.

An apparatus for wireless communications at a wireless device is described. The apparatus may include a processor, memory coupled (e.g., operatively, communicatively, functionally, electronically, or electrically) with the processor, and instructions stored in the memory. The instructions may be executable by the processor to cause the apparatus to receive a first indication of a time duration for an energy receiver device to perform an EH procedure with an ET device and receive a second indication of a set of time offsets, each time offset of the set of time offsets associated with an operation mode of a set of operation modes of the energy receiver device.

Another apparatus for wireless communications at a wireless device is described. The apparatus may include means for receiving a first indication of a time duration for an energy receiver device to perform an EH procedure with an ET device and means for receiving a second indication of a set of time offsets, each time offset of the set of time offsets associated with an operation mode of a set of operation modes of the energy receiver device.

A non-transitory computer-readable medium storing code for wireless communications at a wireless device is described. The code may include instructions executable by a processor to receive a first indication of a time duration for an energy receiver device to perform an EH procedure with an ET device and receive a second indication of a set of time offsets, each time offset of the set of time offsets associated with an operation mode of a set of operation modes of the energy receiver device.

In some examples of the method, apparatuses, and non-transitory computer-readable medium described herein, the wireless device includes a network entity and the method, apparatuses, and non-transitory computer-readable medium may include further operations, features, means, or instructions for transmitting, to the ET device, the first indication and the second indication.

In some examples of the method, apparatuses, and non-transitory computer-readable medium described herein, the wireless device includes the ET device and the method, apparatuses, and non-transitory computer-readable medium may include further operations, features, means, or instructions for performing the EH procedure during the time duration in accordance with the set of time offsets and associated operation modes of the set of operation modes.

In some examples of the method, apparatuses, and non-transitory computer-readable medium described herein, the wireless device includes the ET device and the method, apparatuses, and non-transitory computer-readable medium may include further operations, features, means, or instructions for transmitting a message rejecting the EH procedure based on the time duration, the set of time offsets, or both, failing to satisfy a threshold.

A method for wireless communications at a wireless device is described. The method may include receiving an indication of an energy transmission capability of an ET device, the energy transmission capability identifying a first quantity of energy that the ET device is able to provide to one or more energy receiver devices in a time duration of an EH procedure and transmitting an energy request message indicating a time associated with the time duration to perform the EH procedure and second quantity of energy for the EH procedure for an energy receiver device, the second quantity of energy based on the first quantity of energy identified by the energy transmission capability of the ET device.

An apparatus for wireless communications at a wireless device is described. The apparatus may include a processor, memory (e.g., operatively, communicatively, functionally, electronically, or electrically) coupled with the processor, and instructions stored in the memory. The instructions may be executable by the processor to cause the apparatus to receive an indication of an energy transmission capability of an ET device, the energy transmission capability identifying a first quantity of energy that the ET device is able to provide to one or more energy receiver devices in a time duration of an EH procedure and transmit an energy request message indicating a time associated with the time duration to perform the EH procedure and second quantity of energy for the EH procedure for an energy receiver device, the second quantity of energy based on the first quantity of energy identified by the energy transmission capability of the ET device.

Another apparatus for wireless communications at a wireless device is described. The apparatus may include means for receiving an indication of an energy transmission capability of an ET device, the energy transmission capability identifying a first quantity of energy that the ET device is able to provide to one or more energy receiver devices in a time duration of an EH procedure and means for transmitting an energy request message indicating a time associated with the time duration to perform the EH procedure and second quantity of energy for the EH procedure for an energy receiver device, the second quantity of energy based on the first quantity of energy identified by the energy transmission capability of the ET device.

A non-transitory computer-readable medium storing code for wireless communications at a wireless device is described. The code may include instructions executable by a processor to receive an indication of an energy transmission capability of an ET device, the energy transmission capability identifying a first quantity of energy that the ET device is able to provide to one or more energy receiver devices in a time duration of an EH procedure and transmit an energy request message indicating a time associated with the time duration to perform the EH procedure and second quantity of energy for the EH procedure for an energy receiver device, the second quantity of energy based on the first quantity of energy identified by the energy transmission capability of the ET device.

In some examples of the method, apparatuses, and non-transitory computer-readable medium described herein, the wireless device includes the ET device and the method, apparatuses, and non-transitory computer-readable medium may include further operations, features, means, or instructions for performing, in response to receiving the energy request message, the EH procedure with the energy receiver device according to the second quantity of energy.

In some examples of the method, apparatuses, and non-transitory computer-readable medium described herein, the wireless device includes a network entity and the method, apparatuses, and non-transitory computer-readable medium may include further operations, features, means, or instructions for transmitting the energy request message to the ET device.

BRIEF DESCRIPTION OF THE DRAWINGS

FIG. 1 illustrates an example of a wireless communications system that supports time-domain behavior and energy request indications for energy harvesting (EH) devices in accordance with one or more aspects of the present disclosure.

FIG. 2 illustrates an example of a wireless communications system that supports time-domain behavior and energy request indications for EH devices in accordance with one or more aspects of the present disclosure.

FIG. 3 illustrates an example of a multi-EH timing diagram that supports time-domain behavior and energy request indications for EH devices in accordance with one or more aspects of the present disclosure.

FIG. 4 illustrates an example of a fixed energy request timing diagram that supports time-domain behavior and energy request indications for EH devices in accordance with one or more aspects of the present disclosure.

FIG. 5 illustrates an example of a process flow that supports time-domain behavior and energy request indications for EH devices in accordance with one or more aspects of the present disclosure.

FIG. 6 illustrates an example of a process flow that supports time-domain behavior and energy request indications for EH devices in accordance with one or more aspects of the present disclosure.

FIGs. 7 and 8 show block diagrams of devices that support time-domain behavior and energy request indications for EH devices in accordance with one or more aspects of the present disclosure.

FIG. 9 shows a block diagram of a communications manager that supports time-domain behavior and energy request indications for EH devices in accordance with one or more aspects of the present disclosure.

FIG. 10 shows a diagram of a system including a device that supports time-domain behavior and energy request indications for EH devices in accordance with one or more aspects of the present disclosure.

FIGs. 11 through 18 show flowcharts illustrating methods that support time-domain behavior and energy request indications for EH devices in accordance with one or more aspects of the present disclosure.

DETAILED DESCRIPTION

In some examples of wireless communications, one or more wireless devices (e.g., a user equipment (UE)) may engage in energy harvesting (EH) procedures or processes to harvest energy for operation from various sources (e.g.,

thermal sources, vibration sources, motion sources, radio frequency (RF) sources, other sources, or any combination thereof). For instance, if an EH UE (e.g., an energy receiver device) does not have enough energy for communications or other operations, the EH UE may engage in an EH procedure to accumulate energy from an energy transmitter (ET) device (e.g., an ET UE) for communications or other operations.

In some examples, multiple EH UEs (which may also be or be referred to as energy receiver devices herein) and ET UEs (which may also be or be referred to as energy transmitter devices herein) may operate in a wireless communications system, where each EH UE may use a varying level of energy over a period of time and each ET UE may be able to provide a varying level of energy over a period of time. As such, a first ET UE may be unable to provide the requested energy from a first EH UE while a second ET UE may have enough energy to perform multiple EH procedure with multiple EH UEs. Additionally, or alternatively, a first EH UE may have a lower time restraint to receive energy compared to a second EH UE, but may have no ability to indicate the time restraint to an ET UE. Without capability messaging from the EH UEs indicating the amount of energy and a time duration to receive the energy, the ET UEs may be unable to determine how to prioritize multiple EH procedures. Additionally, or alternatively, the ET UEs may be unable to indicate the amount of energy that a respective ET UE may transmit during a time period.

As such, the network may prioritize the charging of a set EH UEs using a set of ET UEs according to the techniques described herein. For example, an EH UE may indicate multiple time offsets (e.g., each including a number of slots) where each offset is associated with an EH UE behavior. In some examples, the EH UE may indicate the multiple time offsets directly to one or more ET UEs or to a network entity associated with the one or more ET UEs. Additionally, or alternatively, the EH UE may indicate a timing limit that indicates a time interval in which the EH UE requests to receive an amount energy from an ET UE. In some examples, the network entity may configure an ET UE via radio resource control (RRC) signaling with a charging scheme in cases where the ET UE receives multiple charging requests from multiple EH UEs. For example, if an ET UE concurrently receives EH requests from two EH UEs such that both EH requests may be satisfied within the respective time interval indicated by each EH UE, the ET UE prioritize the order of charging based on which EH requests a greater energy, has a lower request time interval, or a combination thereof.

In some cases, the ET UE may report an energy capability message to the network entity that indicates an energy budget that the ET UE may allocate over a duration of time. For example, the ET UE can indicate how many energy requests it may serve during a configured time duration and how many units of energy the ET UE may provide for each request. As such, the ET UE may receive one or more energy requests such that the aggregate energy requested satisfies the energy budget of the ET UE.

Aspects of the disclosure are initially described in the context of wireless communications systems. Aspects of the disclosure are further illustrated by and described with reference to timing diagrams and process flows. Aspects of the disclosure are further illustrated by and described with reference to apparatus diagrams, system diagrams, and flowcharts that relate to time-domain behavior and energy request indications for EH devices.

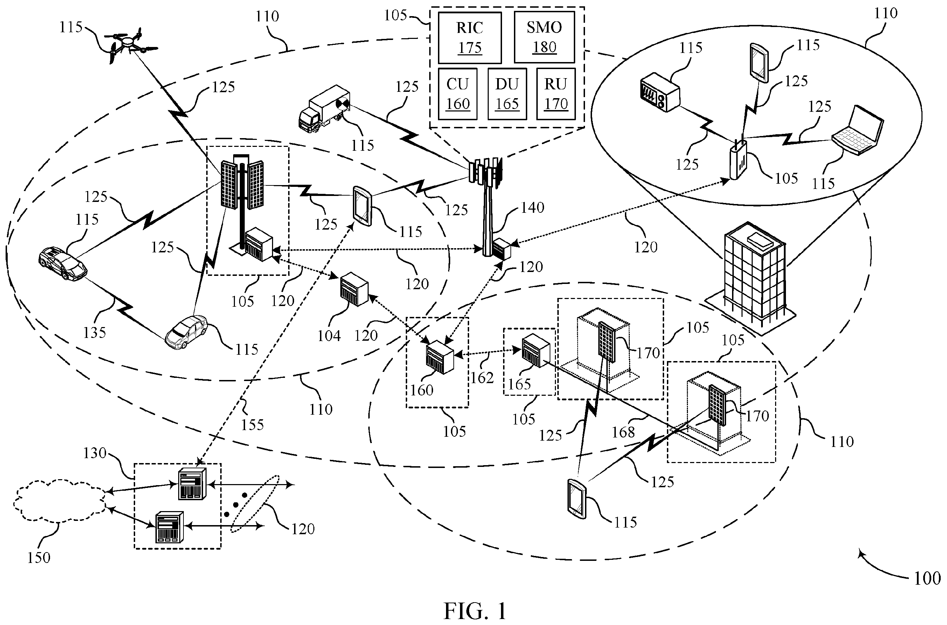

**FIG. 1** illustrates an example of a wireless communications system 100 that supports time-domain behavior and energy request indications for EH devices in accordance with one or more aspects of the present disclosure. The wireless communications system 100 may include one or more network entities 105, one or more UEs 115, and a core network 130. In some examples, the wireless communications system 100 may be a Long Term Evolution (LTE) network, an LTE-Advanced (LTE-A) network, an LTE-A Pro network, a New Radio (NR) network, or a network operating in accordance with other systems and radio technologies, including future systems and radio technologies not explicitly mentioned herein.

The network entities 105 may be dispersed throughout a geographic area to form the wireless communications system 100 and may include devices in different forms or having different capabilities. In various examples, a network entity 105 may be referred to as a network element, a mobility element, a radio access network (RAN) node, or network equipment, among other nomenclature. In some examples, network entities 105 and UEs 115 may wirelessly communicate via one or more communication links 125 (e.g., a radio frequency (RF) access link). For example, a network entity 105 may support a coverage area 110 (e.g., a geographic coverage area) over which the UEs 115 and the network entity 105 may establish one or more communication links 125. The coverage area 110 may be an example of a geographic area over which a network entity 105 and a UE 115 may support the communication of signals according to one or more radio access technologies (RATs).

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be capable of supporting communications with various types of devices, such as other UEs 115 or network entities 105, as shown in FIG. 1.

As described herein, a node of the wireless communications system 100, which may be referred to as a network node, or a wireless node, may be a network entity 105 (e.g., any network entity described herein), a UE 115 (e.g., any UE described herein), a network controller, an apparatus, a device, a computing system, one or more components, or another suitable processing entity configured to perform any of the techniques described herein. For example, a node may be a UE 115. As another example, a node may be a network entity 105. As another example, a first node may be configured to communicate with a second node or a third node. In one aspect of this example, the first node may be a UE 115, the second node may be a network entity 105, and the third node may be a UE 115. In another aspect of this example, the first node may be a UE 115, the second node may be a network entity 105, and the third node may be a network entity 105. In yet other aspects of this example, the first, second, and third nodes may be different relative to these examples. Similarly, reference to a UE 115, network entity 105, apparatus, device, computing system, or the like may include disclosure of the UE 115, network entity 105, apparatus, device, computing system, or the like being a node. For example, disclosure that a UE 115 is configured to receive information from a network entity 105 also discloses that a first node is configured to receive information from a second node.

In some examples, network entities 105 may communicate with the core network 130, or with one another, or both. For example, network entities 105 may communicate with the core network 130 via one or more backhaul communication links 120 (e.g., in accordance with an S1, N2, N3, or other interface protocol). In some examples, network entities 105 may communicate with one another via a backhaul communication link 120 (e.g., in accordance with an X2, Xn, or other interface protocol) either directly (e.g., directly between network entities 105) or indirectly (e.g., via a core network 130). In some examples, network entities 105 may communicate with one another via a midhaul communication link 162 (e.g., in accordance with a midhaul interface protocol) or a fronthaul communication link 168 (e.g., in accordance with a fronthaul interface protocol), or any combination thereof. The backhaul communication links 120, midhaul communication links 162, or fronthaul communication links 168 may be or include one or more wired links (e.g., an electrical link, an optical fiber link), one or more wireless links (e.g., a radio link, a wireless optical link), among other examples or various combinations thereof. A UE 115 may communicate with the core network 130 via a communication link 155.

One or more of the network entities 105 described herein may include or may be referred to as a base station 140 (e.g., a base transceiver station, a radio base station, an NR base station, an access point, a radio transceiver, a NodeB, an eNodeB (eNB), a next-generation NodeB or a giga-NodeB (either of which may be referred to as a gNB), a 5G NB, a next-generation eNB (ng-eNB), a Home NodeB, a Home eNodeB, or other suitable terminology). In some examples, a network entity 105 (e.g., a base station 140) may be implemented in an aggregated (e.g., monolithic, standalone) base station architecture, which may be configured to utilize a protocol stack that is physically or logically integrated within a single network entity 105 (e.g., a single RAN node, such as a base station 140).

In some examples, a network entity 105 may be implemented in a disaggregated architecture (e.g., a disaggregated base station architecture, a disaggregated RAN architecture), which may be configured to utilize a protocol stack that is physically or logically distributed among two or more network entities 105, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, a network entity 105 may include one or more of a central unit (CU) 160, a distributed unit (DU) 165, a radio unit (RU) 170, a RAN Intelligent Controller (RIC) 175 (e.g., a Near-Real Time RIC (Near-RT RIC), a Non-Real Time RIC (Non-RT RIC)), a Service Management and Orchestration (SMO) 180 system, or any combination thereof. An RU 170 may also be referred to as a radio head, a smart radio head, a remote radio head (RRH), a remote radio unit (RRU), or a transmission reception point (TRP). One or more components of the network entities 105 in a disaggregated RAN architecture may be co-located, or one or more components of the network entities 105 may be located in distributed locations (e.g., separate physical locations). In some examples, one or more network entities 105 of a disaggregated RAN architecture may be implemented as virtual units (e.g., a virtual CU (VCU), a virtual DU (VDU), a virtual RU (VRU)).

The split of functionality between a CU 160, a DU 165, and an RU 170 is flexible and may support different functionalities depending upon which functions (e.g., network layer functions, protocol layer functions, baseband functions, RF functions, and any combinations thereof) are performed at a CU 160, a DU 165, or an RU 170. For example, a functional split of a protocol stack may be employed between a CU 160 and a DU 165 such that the CU 160 may support one or more layers of the protocol stack and the DU 165 may support one or more different layers of the protocol stack. In some examples, the CU 160 may host upper protocol layer (e.g., layer 3 (L3), layer 2 (L2)) functionality and signaling (e.g., Radio Resource Control (RRC), service data adaption protocol (SDAP), Packet Data Convergence Protocol (PDCP)). The CU 160 may be connected to one or more DUs 165 or RUs 170, and the one or more DUs 165 or RUs 170 may host lower protocol layers, such as layer 1 (L1) (e.g., physical (PHY) layer) or L2 (e.g., radio link control (RLC) layer, medium access control (MAC) layer) functionality and signaling, and may each be at least partially controlled by the CU 160. Additionally, or alternatively, a functional split of the protocol stack may be employed between a DU 165 and an RU 170 such that the DU 165 may support one or more layers of the protocol stack and the RU 170 may support one or more different layers of the protocol stack. The DU 165 may support one or multiple different cells (e.g., via one or more RUs 170). In some cases, a functional split between a CU 160 and a DU 165, or between a DU 165 and an RU 170 may be within a protocol layer (e.g., some functions for a protocol layer may be performed by one of a CU 160, a DU 165, or an RU 170, while other functions of the protocol layer are performed by a different one of the CU 160, the DU 165, or the RU 170). A CU 160 may be functionally split further into CU control plane (CU-CP) and CU user plane (CU-UP) functions. A CU 160 may be connected to one or more DUs 165 via a midhaul communication link 162 (e.g., F1, F1-c, F1-u), and a DU 165 may be connected to one or more RUs 170 via a fronthaul communication link 168 (e.g., open fronthaul (FH) interface). In some examples, a midhaul communication link 162 or a fronthaul communication link 168 may be implemented in accordance with an interface (e.g., a channel) between layers of a protocol stack supported by respective network entities 105 that are in communication via such communication links.

In wireless communications systems (e.g., wireless communications system 100), infrastructure and spectral resources for radio access may support wireless backhaul link capabilities to supplement wired backhaul connections, providing an IAB network architecture (e.g., to a core network 130). In some cases, in an IAB network, one or more network entities 105 (e.g., IAB nodes 104) may be partially controlled by each other. One or more IAB nodes 104 may be referred to as a donor entity or an IAB donor. One or more DUs 165 or one or more RUs 170 may be partially controlled by one or more CUs 160 associated with a donor network entity 105 (e.g., a donor base station 140). The one or more donor network entities 105 (e.g., IAB donors) may be in communication with one or more additional network entities 105 (e.g., IAB nodes 104) via supported access and backhaul links (e.g., backhaul communication links 120). IAB nodes 104 may include an IAB mobile termination (IAB-MT) controlled (e.g., scheduled) by DUs 165 of a coupled IAB donor. An IAB-MT may include an independent set of antennas for relay of communications with UEs 115, or may share the same antennas (e.g., of an RU 170) of an IAB node 104 used for access via the DU 165 of the IAB node 104 (e.g., referred to as virtual IAB-MT (vIAB-MT)). In some examples, the IAB nodes 104 may include DUs 165 that support communication links with additional entities (e.g., IAB nodes 104, UEs 115) within the relay chain or configuration of the access network (e.g., downstream). In such cases, one or more components of the disaggregated RAN architecture (e.g., one or more IAB nodes 104 or components of IAB nodes 104) may be configured to operate according to the techniques described herein.

In the case of the techniques described herein applied in the context of a disaggregated RAN architecture, one or more components of the disaggregated RAN architecture may be configured to support time-domain behavior and energy request indications for EH devices as described herein. For example, some operations described as being performed by a UE 115 or a network entity 105 (e.g., a base station 140) may additionally, or alternatively, be performed by one or more components of the disaggregated RAN architecture (e.g., IAB nodes 104, DUs 165, CUs 160, RUs 170, RIC 175, SMO 180).

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a multimedia/entertainment device (e.g., a radio, a MP3 player, or a video device), a camera, a gaming device, a navigation/positioning device (e.g., GNSS (global navigation satellite system) devices based on, for example, GPS (global positioning system), Beidou, GLONASS, or Galileo, or a terrestrial-based device), a tablet computer, a laptop computer, a netbook, a smartbook, a personal computer, a smart device, a wearable device (e.g., a smart watch, smart clothing, smart glasses, virtual reality goggles, a smart wristband, smart jewelry (e.g., a smart ring, a smart bracelet)), a drone, a robot/robotic device, a vehicle, a vehicular device, a meter (e.g., parking meter, electric meter, gas meter, water meter), a monitor, a gas pump, an appliance (e.g., kitchen appliance, washing machine, dryer), a location tag, a medical/healthcare device, an implant, a sensor/actuator, a display, or any other suitable device configured to communicate via a wireless or wired medium, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the network entities 105 and the network equipment including macro eNBs or gNBs, small cell eNBs or gNBs, or relay base stations, among other examples, as shown in FIG. 1.

The UEs 115 and the network entities 105 may wirelessly communicate with one another via one or more communication links 125 (e.g., an access link) using resources associated with one or more carriers. The term "carrier" may refer to a set of RF spectrum resources having a defined physical layer structure for supporting the communication links 125. For example, a carrier used for a communication link 125 may include a portion of a RF spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers. Communication between a network entity 105 and other devices may refer to communication between the devices and any portion (e.g., entity, subentity) of a network entity 105. For example, the terms "transmitting," "receiving," or "communicating," when referring to a network entity 105, may refer to any portion of a network entity 105 (e.g., a base station 140, a CU 160, a DU 165, a RU 170) of a RAN communicating with another device (e.g., directly or via one or more other network entities 105).

Signal waveforms transmitted via a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may refer to resources of one symbol period (e.g., a duration of one modulation symbol) and one subcarrier, in which case the symbol period and subcarrier spacing may be inversely related. The quantity of bits carried by each resource element may depend on the modulation scheme (e.g., the order of the modulation scheme, the coding rate of the modulation scheme, or both), such that a relatively higher quantity of resource elements (e.g., in a transmission duration) and a relatively higher order of a modulation scheme may correspond to a relatively higher rate of communication. A wireless communications resource may refer to a combination of an RF spectrum resource, a time resource, and a spatial resource (e.g., a spatial layer, a beam), and the use of multiple spatial resources may increase the data rate or data integrity for communications with a UE 115.

The time intervals for the network entities 105 or the UEs 115 may be expressed in multiples of a basic time unit which may, for example, refer to a sampling period of $T_s = 1/(\Delta f_{max} \cdot N_f)$ seconds, for which $\Delta f_{max}$ may represent a supported subcarrier spacing, and $N_f$ may represent a supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively-numbered subframes or slots, and each subframe or slot may have the same duration. In some examples, a frame may be divided (e.g., in the time domain) into subframes, and each subframe may be further divided into a quantity of slots. Alternatively, each frame may include a variable quantity of slots, and the quantity of slots may depend on subcarrier spacing. Each slot may include a quantity of symbol periods (e.g., depending on the length of the cyclic prefix prepended to each symbol period). In some wireless communications systems 100, a slot may further be divided into multiple mini-slots associated with one or more symbols. Excluding the cyclic prefix, each symbol period may be associated with one or more (e.g., $N_f$) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., a quantity of symbol periods in a TTI) may be variable. Additionally, or alternatively, the smallest scheduling unit of the wireless communications system 100 may be dynamically selected (e.g., in bursts of shortened TTIs (sTTIs)).

Physical channels may be multiplexed for communication using a carrier according to various techniques. A physical control channel and a physical data channel may be multiplexed for signaling via a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a set of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to an amount of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

In some examples, a network entity 105 (e.g., a base station 140, an RU 170) may be movable and therefore provide communication coverage for a moving coverage area 110. In some examples, different coverage areas 110 associated with different technologies may overlap, but the different coverage areas 110 may be supported by the same network entity 105. In some other examples, the overlapping coverage areas 110 associated with different technologies may be supported by different network entities 105. The wireless communications system 100 may include, for example, a heterogeneous network in which different types of the network entities 105 provide coverage for various coverage areas 110 using the same or different radio access technologies.

The wireless communications system 100 may support synchronous or asynchronous operation. For synchronous operation, network entities 105 (e.g., base stations 140) may have similar frame timings, and transmissions from different network entities 105 may be approximately aligned in time. For asynchronous operation, network entities 105 may have different frame timings, and transmissions from different network entities 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a network entity 105 (e.g., a base station 140) without human intervention. In some examples, M2M communication or MTC may include communications from devices that integrate sensors or meters to measure or capture information and relay such information to a central server or application program that uses the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging. In an aspect, techniques disclosed herein may be applicable to MTC or IoT UEs. MTC or IoT UEs may include MTC/enhanced MTC (eMTC, also referred to as CAT-M, Cat M1) UEs, NB-IoT (also referred to as CAT NB1) UEs, as well as other types of UEs. eMTC and NB-IoT may refer to future technologies that may evolve from or may be based on these technologies. For example, eMTC may include FeMTC (further eMTC), eFeMTC (enhanced further eMTC), and mMTC (massive MTC), and NB-IoT may include eNB-IoT (enhanced NB-IoT), and FeNB-IoT (further enhanced NB-IoT).

Some UEs 115 may be configured to employ operating modes that reduce power consumption, such as half-duplex communications (e.g., a mode that supports one-way communication via transmission or reception, but not transmission and reception concurrently). In some examples, half-duplex communications may be performed at a reduced peak rate. Other power conservation techniques for the UEs 115 include entering a power saving deep sleep mode when not engaging in active communications, operating using a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC). The UEs 115 may be designed to support ultra-reliable, low-latency, or critical functions. Ultra-reliable communications may include private communication or group communication and may be supported by one or more services such as push-to-talk, video, or data. Support for ultra-reliable, low-latency functions may include prioritization of services, and such services may be used for public safety or general commercial applications. The terms ultra-reliable, low-latency, and ultra-reliable low-latency may be used interchangeably herein.

In some examples, a UE 115 may be configured to support communicating directly with other UEs 115 via a device-to-device (D2D) communication link 135 (e.g., in accordance with a peer-to-peer (P2P), D2D, or sidelink protocol). In some examples, one or more UEs 115 of a group that are performing D2D communications may be within the coverage area 110 of a network entity 105 (e.g., a base station 140, an RU 170), which may support aspects of such D2D communications being configured by (e.g., scheduled by) the network entity 105. In some examples, one or more UEs 115 of such a group may be outside the coverage area 110 of a network entity 105 or may be otherwise unable to or not configured to receive transmissions from a network entity 105. In some examples, groups of the UEs 115 communicating via D2D communications may support a one-to-many (1:M) system in which each UE 115 transmits to each of the other UEs 115 in the group. In some examples, a network entity 105 may facilitate the scheduling of resources for D2D communications. In some other examples, D2D communications may be carried out between the UEs 115 without an involvement of a network entity 105.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the network entities 105 (e.g., base stations 140) associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

The wireless communications system 100 may operate using one or more frequency bands, which may be in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. UHF waves may be blocked or redirected by buildings and environmental features, which may be referred to as clusters, but the waves may penetrate structures sufficiently for a macro cell to provide service to the UEs 115 located indoors. Communications using UHF waves may be associated with smaller antennas and shorter ranges (e.g., less than 100 kilometers) compared to communications using the smaller frequencies and longer waves of the high frequency (HF) or very high frequency (VHF) portion of the spectrum below 300 MHz.

The wireless communications system 100 may utilize both licensed and unlicensed RF spectrum bands. For example, the wireless communications system 100 may employ License Assisted Access (LAA), LTE-Unlicensed (LTE-U) radio access technology, or NR technology using an unlicensed band such as the 5 GHz industrial, scientific, and medical (ISM) band. While operating using unlicensed RF spectrum bands, devices such as the network entities 105 and the UEs 115 may employ carrier sensing for collision detection and avoidance. In some examples, operations using unlicensed bands may be based on a carrier aggregation configuration in conjunction with component carriers operating using a licensed band (e.g., LAA). Operations using unlicensed spectrum may include downlink transmissions, uplink transmissions, P2P transmissions, or D2D transmissions, among other examples.

A network entity 105 (e.g., a base station 140, an RU 170) or a UE 115 may be equipped with multiple antennas, which may be used to employ techniques such as transmit diversity, receive diversity, multiple-input multiple-output (MIMO) communications, or beamforming. The antennas of a network entity 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a network entity 105 may be located at diverse geographic locations. A network entity 105 may include an antenna array with a set of rows and columns of antenna ports that the network entity 105 may use to support beamforming of communications with a UE 115. Likewise, a UE 115 may include one or more antenna arrays that may support various MIMO or beamforming operations. Additionally, or alternatively, an antenna panel may support RF beamforming for a signal transmitted via an antenna port.

Beamforming, which may also be referred to as spatial filtering, directional transmission, or directional reception, is a signal processing technique that may be used at a transmitting device or a receiving device (e.g., a network entity 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating along particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or PDCP layer may be IP-based. An RLC layer may perform packet segmentation and reassembly to communicate via logical channels. A MAC layer may perform priority handling and multiplexing of logical channels into transport channels. The MAC layer also may implement error detection techniques, error correction techniques, or both to support retransmissions to improve link efficiency. In the control plane, an RRC layer may provide establishment, configuration, and maintenance of an RRC connection between a UE 115 and a network entity 105 or a core network 130 supporting radio bearers for user plane data. A PHY layer may map transport channels to physical channels.

In some examples of wireless communication system 100, one or more UEs 115 may engage in EH procedures or processes to harvest energy for operation from various sources. For instance, if an EH UE 115 (e.g., an energy receiver device) does not have enough energy for communications or other operations, the EH UE 115 may engage in an EH procedure to accumulate energy from an ET device (e.g., an ET UE 115) for communications or other operations.

In some examples, multiple EH UEs 115 and ET UEs 115 may operate in a wireless communications system, where each EH UE 115 may use a varying level of energy over a period of time and each ET UE 115 may be able to provide a varying level of energy over a period of time. As such, the wireless communications system 100 may prioritize the charging of a set EH UEs 115 using a set of ET UEs 115 according to the techniques described herein. For example, an EH may indicate multiple time offsets (e.g., each including a number of slots) where each offset may be associated with an EH UE 115 behavior. In some examples, the EH UE 115 may indicate the multiple time offsets directly to one or more ET UEs 115 or to a network entity associated with the one or more ET UEs 115. Additionally, or alternatively, the EH UE 115 may indicate a timing limit that indicates a time interval in which the EH UE 115 requests to receive an amount energy from an ET UE 115. In some examples, the network entity may configure an ET UE 115 via RRC signaling with a charging scheme in cases where the ET UE 115 receives multiple charging requests from multiple EH UEs 115.

In some cases, the ET UE 115 may report an energy capability message to the network entity that indicates an energy budget that the ET UE 115 may allocate over a duration of time. For example, the ET UE 115 can indicate how many energy requests it may serve during a configured time duration and how many units of energy the ET UE 115 may provide for each request. As such, the ET UE 115 may receive one or more energy requests such that the aggregate energy requested satisfies the energy budget of the ET UE 115.

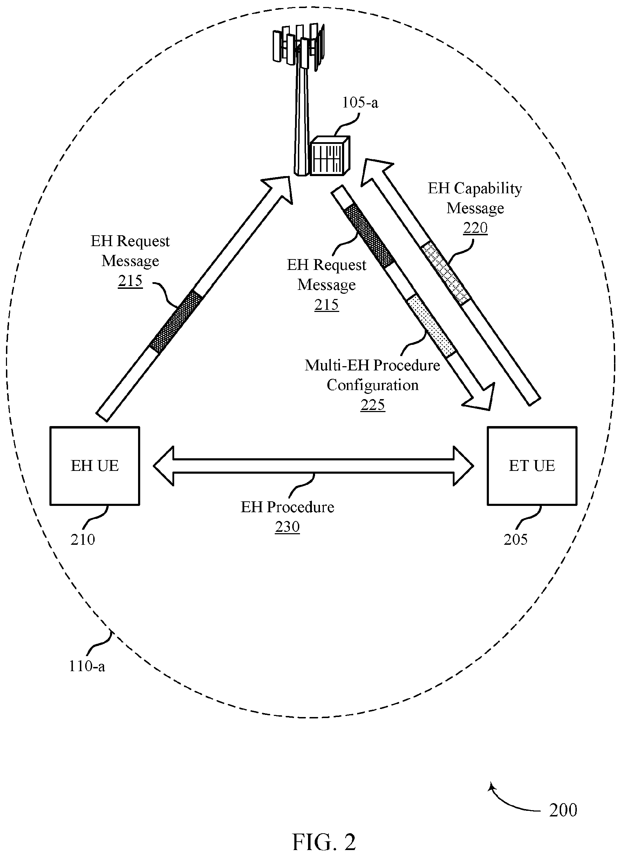

**FIG. 2** illustrates an example of a wireless communications system 200 that supports time-domain behavior and energy request indications for EH devices in accordance with one or more aspects of the present disclosure. In some examples, wireless communications system 200 may implement one or more aspects of wireless communications system 100. For instance, an EH UE 210 and ET UE 205 may be respective examples of UEs 115, a network entity 105-a may be an example of a network entity 105, and a geographic coverage are 110-a may be an example of a geographic coverage area 110, as described with reference to FIG. 1. While examples are discussed herein, any number of devices and device types may be used to accomplish implementations described in the present disclosure.

In some examples of wireless communications system 200, one or more wireless devices (e.g., EH UE 210 and ET UE 205) may engage in EH procedures 230 or processes to harvest energy for operation from various sources. For instance, the EH UE 210 may be an example of a zero power UE 115 (e.g., an IoT device), and may not have enough energy to perform communications or other operations for more than a configured duration of time. As such, the EH UE 210 may engage in an EH procedure 230 to accumulate energy from a second device (e.g., the ET UE 205). In some examples, the wireless communications system may include multiple EH UEs 210 that may request respective EH procedures 230 and multiple ET UEs 205 that may provide energy to the EH UEs 210. In such examples, each EH UE 210 may use a varying level of energy over a period of time and each ET UE 205 may be able to provide a varying level of energy over that period of time. As such, it may be advantageous for each EH UE 210 to indicate an amount of requested energy and a timing parameter indicating an upper limit of when to receive the requested energy so the associated network may prioritize charging the respective EH UEs 210. Additionally, or alternatively, it may be advantageous for each ET UE 205 to transmit to the network an energy capability message that indicates an energy budget a given ET UE 205 may allocate over a duration of time.

As such, the wireless communications system 200 may introduce signaling of time-domain behavior at the EH UE 210 that may be associated with an expected charging rate and a timing parameter indicating an upper limit of when the EH UE 210 requests to perform an EH procedure 230. For example, the EH UE 210 may transmit an EH request message 215 to the network entity 105-a, to one or more ET UEs 205, or both. In examples where the EH UE 210 transmits the EH request message 215 to the network entity 105-a, the network entity 105-a may forward the EH request message 215 to the ET UE 205 (e.g., as illustrated in FIG. 2). Additionally, or alternatively, the EH UE 210 may transmit the EH request message 215 directly to the ET UE 205 (e.g., not illustrated in FIG. 2).

In some examples, the EH UE 210 may indicate, to the network entity 105-a or to one or more ET UEs 205, time offsets and an operation (e.g., a respective operation, or an operation or operation mode corresponding to the time offset) at the EH UE 210 associated with each of the time offsets. For example, the indication may include information synonymous with Table 1:

Table 1: Example of Timing Offset and associated EH UE Operation

| Timing Offset (slots) | EH UE 210 Operation Before Timing Offset |
|---|---|
| 10 | Full UE functionality |
| 40 | Refrain from data transmission |
| 80 | Digital circuitry off |

It may be understood that while Table 1 provides an example of three timing offsets associated with three EH UE 210 operations, the EH UE 210 may indicate any number of timing offsets associated with any number of EH UE 210 operations.

In some examples, the indication of the time offsets may be included in the EH request message 215, may be part of a dynamic indication, may be part of a separate control message (e.g., included in an RRC, a MAC control element (MAC-CE), uplink control information (UCI)), or a combination thereof. Additionally, or alternatively, the EH UE 210 may include, in the EH request message 215, a maximum limit for when the energy request is expected to be fulfilled (e.g., $N2\_energy\_max$ time limit). As such, the EH UE 210 may expect for the ET UE 205 to satisfy the EH request (e.g., perform the associated EH procedure 230) within the $N2\_energy\_max$ time limit. In some examples, the $N2\_energy\_max$ time limit may be an indication in terms of slots, frames, or seconds, among other examples.

Based on receiving the EH request message 215 from the EH UE 210 (e.g., directly or via the network entity 105-a serving as a relay), the ET UE 205 may determine whether the ET UE 205 can satisfy the amount of energy requested during the $N2\_energy\_max$ time limit. If the ET UE 205 determines it cannot satisfy the EH request, the ET UE 205 may ignore the EH request message 215. As such, if the EH UE 210 does not receive an acknowledgement message from the ET UE 205 in response to the EH request message 215 during a configured timing threshold, the EH UE 210 may retransmit the EH request message 215 to one or more other ET UEs 205 (e.g., directly or via the network entity 105-a serving as a relay). Additionally, or alternatively, if the ET UE 205 determines it cannot satisfy the EH request, the ET UE 205 may transmit an indication to the EH UE 210 (e.g., directly or via the network entity 105-a serving as a relay) indicating it may not satisfy the EH request. Based on receiving the indication from the ET UE 205, the EH UE 210 may retransmit the EH request message 215 to one or more other ET UEs 205 (e.g., directly or via the network entity 105-a serving as a relay).

Additionally, or alternatively, the EH UE 210 may also indicate an expected operation before and after the *N2_energy_max* time limit. For example, two expected operations may be indicated, such as no data reception at the EH UE 210 before the *N2_energy_max* time limit and a digital circuitry switch after the *N2_energy_max* time limit.

Based on the wireless communications system 200 supporting multiple EH UEs 210, the ET UE 205 may receive multiple EH request messages 215, where each EH request may belong to a respective EH UE. In some examples, the ET UE 205 may also be configured with durations in which to charge or to communicate data, during which the ET UE 205 may be unable to perform EH procedures 230. As such, the ET UE 205 may receive RRC signaling or be indicated dynamically with an expected behavior to follow when receiving multiple EH request messages 215 that at least partially overlap in time. For example, the ET UE 205 may receive from the network entity 105-a, a multi-EH procedure configuration 225. If two EH request messages 215 are received at the ET UE 205 and both may be satisfied within respective indicated time intervals (e.g., before the respective *N2_ energy_max* time limit), the ET UE 205 may perform both associated EH procedure. In some examples, the ET UE 205 may prioritize the multiple EH procedures 230 in accordance with the multi-EH procedure configuration 225. For instance, the ET UE 205 may prioritize an EH procedure 230 of the two EH procedures 230 with a shorter *N2_energy_max* time limit. Additionally, or alternatively, the ET UE 205 may perform the multiple EH procedure 230 concurrently.

Based on a certain input power to the EH UE 210 and a consumed power at the EH UE 210 during activity, a device active cycle may be configured at the EH UE. That is, if the input power from the EH procedure 230 is $P_x$ and RF, light/laser to direct current (DC) conversion efficiency for $P_x$ is $\eta_x$, then the harvested power may be $P_x \cdot \eta_x$. As such, if the integrated circuit (IC) power of the EH UE 210 is $P_y$ for a reading duration of Y time units, the condition to operate the EH UE 210 may be associated with Equation 1:

$$P_x.\eta_x.X \geq P_y . Y$$

where X may be a harvesting duration for the EH UE 210 to receive the harvest power $P_x$ with a conversion efficiency of $\eta_x$. As such, the EH UE 210 may configure the harvesting duration of *X* in accordance with Equation 2:

$$X \geq \frac{P_y . Y}{P_x.\eta_x}$$

Based on determining the harvesting duration of X, the EH UE 210 may also determine an EH-to-activity time ratio in accordance with Equation 3:

$$\frac{X}{Y} \geq \frac{P_y}{P_x.\eta_x}$$

As such, the EH UE 210 may use the harvesting duration of *X* and the EH-to-activity time ratio to determine the *N2_energy_max* time limit to indicate in the EH request message 215.

In some examples, the ET UE 205 may define a maximum amount of time that the ET UE 205 may use to participate in one or more EH procedures 230 (e.g., *N2_energy_max).* For example, the ET UE 205 may transmit an EH capability message 220 to the network entity 105-a, to the EH UE 210 (e.g., directly or via the network entity 105-a as a relay), or both. In some examples, the EH capability message 220 may include an indication of *N2_energy_max.* As such, the network entity 105-a configure the ET UE 205 with an amount of time for the ET UE 205 to perform EH procedures 230 that may be less than *N2_energy_max* (e.g., N2_energy). In examples of light energy transfer, *N2_energy_* may be associated with the time between receiving an energy request message and preparing a light or laser signal for the associated EH procedure 230.

In some examples, *N2_energy_* may be a function of band, band combination, carrier, carrier combination, energy waveform, or a combination thereof. In some examples, the energy waveform may be a single tone, a multi-tone, OFDM, or DFT-S-OFDM, quadrature amplitude modulation (QAM) (e.g., single carrier QAM (SC-QAM), pulse amplitude modulation (PAM), or a combination thereof. In some examples, the waveform may have an associated modulation such as an amplitude-shift keying (ASK), phase shift keying (PSK), quadrature PSK (QPSK), M-ary PSK (MPSK), multipulse pulse-position modulation (M-PPM), on-off keying (OOK), Gaussian, Bernoulli, Gold, DFT, Reed-Solomon, Zadoff-Chu, or a combination thereof. In some examples, a sounding reference signal (SRS) or SRS-like signal, control state information reference signal (CSI-RS) or CSI-RS-like signal, a data or data-like energy signal, or a repetition of another signal may be used as a means of carrying the respective waveform and modulation.

In some examples, the EH UE 210 or network entity 105-a may indicate to the ET UE 205 a time between an downlink control information (DCI) slot and an energy slot (e.g., *K2_energy*, similar to a time between an DCI and a physical uplink shared channel (PUSCH)). If the ET UE 205 is unable to satisfy the parameters of the *K2_energy,* the ET UE 205 may ignore the EH request. Additionally, or alternatively, the ET UE 205 may transmit an indication to indicating that it may not satisfy the EH request. Additionally, or alternatively, the ET UE 205 may be able to satisfy a portion of the EH request, and as such may perform a partial EH procedure 230 with the EH UE 210.

In some example, the ET UE 205 may configure an energy budget for performing EH procedures 230 with multiple EH UEs 210. For example, the ET UE 205 may configure a total energy budget of E every T seconds. As such, the ET UE 205 may perform a first EH procedure 230 of power P1 over *T*1 and a second EH procedure 230 of power P2 over time *T2* such that *P1 T*1 + *P2 T*2 ≤ *E*, where *T*1 + *T*2 ≤ *T*. For a fixed energy budget design, where the ET UE 205 may spend E energy units every T time units, the ET UE 205 may use an average transmit power of *E/T*. For example, if the ET UE 205 transmits using *E/T* for each EH procedure 230, the ET UE 205 may define *T*1 according to the energy requested for the first EH procedure 230 (e.g., E1) and define *T*2 according to the energy requested for the second EH procedure 230 (e.g., E2). Additionally, or alternatively, the ET UE 205 may assign time allocations (e.g., fixed configured grants for charging allocated by the network entity 105-a or reserved by the ET UE 205) and assign power levels P1 and P2 according to E1, E2, *T1,* and *T2.*

In some examples, the ET UE 205 may configure the multiple EH procedures 230 based on ET UE 205 implementation. Additionally, or alternatively, the ET UE 205 may configure the multiple EH procedures 230 in accordance with controlling power output to the respective EH UEs 210 (e.g., similar to a power control procedure). As such, one of the various approaches for configuring the multiple EH procedures 230 may be signaled to the ET UE 205 via configuration message (e.g., the multi-EH procedure configuration 225) or a resource pool level configuration via sidelink, a band or a band comb, or a carrier or a carrier comb. In some examples, the ET UE 205 may indicate a preference of one of the various approaches via signaling to the network entity 105-a.

In examples where the network entity 105-a transmits one or more EH request messages 215 to the ET UE 205, it may be advantageous for the network entity 105-a to determine a maximum energy budget that the ET UE 205 may allocate. As such, the ET UE 205 may transmit as part of the EH capability message 220, an initial or default value of E for the fixed energy budget design. As such, the network entity 105-a may configure the ET UE 205 with an energy configuration (e.g., *E_config*) that may be less than E. In some examples, *E_config* and E may change dynamically. For example, *E* may depend on a current battery status of the ET UE 205 or a number of other tasks that ET UE 205 may perform. As such, the ET UE 205 may dynamically indicate an update for the value of E to the network entity 105-a and the network entity 105-a may transmit an updated value *of E_config* in accordance with the indication. In some examples, the indications of *E* and *E_config* may be transmitted via L1, L2, L3 communications.

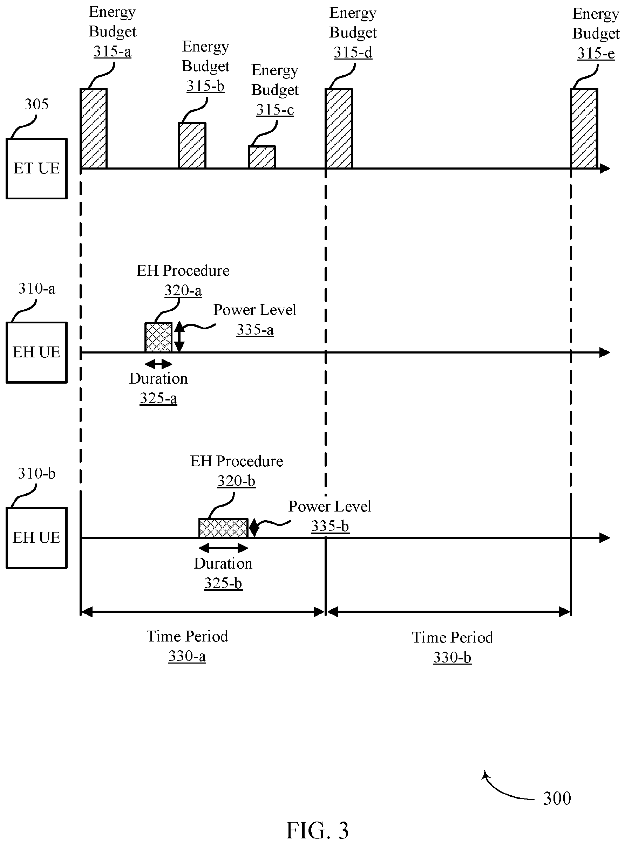

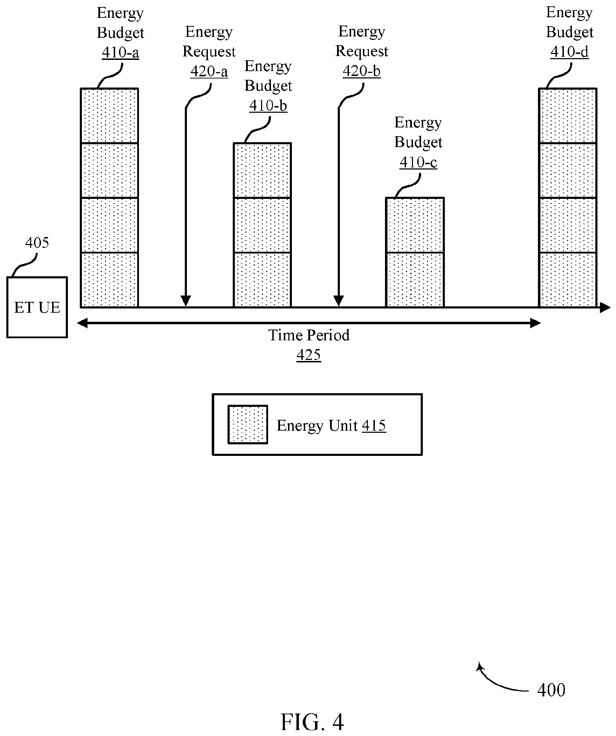

In some cases, energy power allocation to the EH UEs 210 may be dynamic (e.g., energy *E* may be fixed but power and time may be changed). Additionally, or alternatively, the power and time for an EH procedure 230 may be fixed. As such, the network entity 105-a may indicate to the ET UE 205 whether to use a fixed energy level (e.g., *E/T* remains constant) power level or a dynamic power level for energy grants (e.g., *E/T* may vary for respective EH procedures 230). Further implementations of the fixed energy budget design are described herein, including with reference to FIGs. 3 and 4.

**FIG. 3** illustrates an example of a multi-EH timing diagram 300 that supports time-domain behavior and energy request indications for EH devices in accordance with one or more aspects of the present disclosure. In some examples, a multi-EH timing diagram 300 may implement one or more aspects of wireless communications system 100 and wireless communications system 200. For instance, an EH UE 310-a, EH UE 310-b, and ET UE 305 may be respective examples of UEs 115 as described with reference to FIG. 1. While examples are discussed herein, any number of devices and device types may be used to accomplish implementations described in the present disclosure.

As illustrated in in FIG. 3, the ET UE 305 may have an energy budget 315 for a given time period 330. For example, at the beginning of each time period 330-a, the ET UE 305 may perform an energy budget renewal, such that energy budget 315-a, 315-d, and 315-e may be the configured amount of energy the ET UE 305 may use for EH procedures 320 during a time period 330 (e.g., E with reference to FIG. 2). As such, the ET UE 305 perform a number of EH procedures 320 in accordance with energy budget 315 allotted for a respective time period 330.

In some examples, EH UE 310-a and EH UE 310-b may be examples of radio frequency identification (RFID) tags with respective ICs. In some examples, EH UE 310-a may have a first IC that may use an amount of power *Py*1 and the EH UE 310-b may have a second IC that uses a power of *Py*1. As such, if the EH UE 310-a operates for a time of *X*1, the energy consumed by the EH UE 310-a may be *Py*1*X*1. Additionally, if the EH UE 310-b operates for a time of *X2,* the energy consumed by the EH UE 310-a may be *Py*2* X2. As such, EH UE 310-a may have an energy causality constraint in accordance with Equation 4:

$$Pc1 * \eta1 * T1 \geq Py1 * X1$$

where *Pc*1 may be the input power from the EH procedure 320-a, *η*1 may be the RF-to-DC conversion efficiency for the first IC, and *T*1 may be a duration 325-a of the EH procedure 320-a. As such, *Pc*1 * *T*1 multiplied by an associated power level 335-a *(PL1)* may be equal to the requested transmit energy for the EH procedure 320-a. As such, the requested transmit energy may be related to parameters *Py*1, *X*1, $\eta$1, and *PL*1 in accordance with Equation 5:

$$Pc1 * T1 * PL1 \geq (Py1 * \frac{X1}{\eta 1}) * PL1$$

A similar process for determining the transmit energy for EH procedure 320-b may be determined in accordance with Equation 6:

$$Pc2 * T2 * PL2 \geq (Py2 * \frac{X2}{\eta 2}) * PL2$$

where *Pc*1 is the input power from the EH procedure 320-b, *T2* is a duration 325-b of the EH procedure 320-b, *PL2* is a power level 335-b for the EH procedure 320-b, and $\eta$2 is the is the RF-to-DC conversion efficiency for the second IC. As such, the ET UE 305 may perform both the EH procedure 320-a and the EH procedure 320-b over the time period 330-a such that the sum of energy for the two EH procedures 320 may not exceed the energy budget 315-a. For example, the ET UE 305 may perform the EH procedures 320 in accordance with Equation 7:

$$\left(Py1 * \frac{X1}{\eta 1}\right) * PL1 + \left(Py2 * \frac{X2}{\eta 2}\right) * PL2 \leq E$$

By operating in accordance with Equation 7, the ET UE 305 may perform the EH procedure 320-a, such that a resulting energy budget 315-b may be equal to the difference between energy budget 315-a and the transmit energy for EH procedure 320-a in accordance with Equation 5. In some examples, the ET UE 305 may also perform the EH procedure 320-b, such that a resulting energy budget 315-c may be equal to the difference between energy budget 315-b and the transmit energy for EH procedure 320-b in accordance with Equation 6. In some cases, the transmit energy for EH procedure 320-b may be greater than the energy budget 315-b. As such, the ET UE 305 may transmit the remaining energy budget 315-b to the EH UE 310-b (e.g., perform a partial EH procedure 320) if the energy budget 315-b satisfies a defined percentage of the energy request by the EH UE 310-b. Additionally, or alternatively, the ET UE 305 may wait for the next time period 330-b, where the energy budget 315-d may be renewed and perform the EH procedure 320-b during time period 330-b. While multi-EH timing diagram 300 illustrates the ET UE 305 performing two EH procedures 320 during the time period 330-a, it may be understood that the ET UE 305 may perform any number of EH procedures 320 during a time period in accordance with the techniques and Equations described herein.
In some cases, the ET UE 305 may also determine a number of configured or scheduled grants to use to deliver a respective EH procedure 320. For example, assuming an allocation time of *Tx,* a power of *Px,* and an energy of *Ex,* the energy delivered per grant may be configured via a fixed power scheme (e.g., *Ex =Px\*Tx*) or a fixed energy scheme (e.g., *Px = Ex/Tx).* In some examples, the ET UE 305 may maintain a fixed power scheme to maintain phase continuity, and as such *Tx* may be configured to determine a number of symbols to maintain phase continuity between the number of grants. For example, the number of grants for EH procedure 320-a may be determined in accordance with Equation 8:

$$\#grants = \left\lceil \frac{\left(Py1 * \frac{X1}{\eta 1}\right) * PL1}{P_x T_x} \right\rceil$$

In examples of a fixed energy scheme, the ET UE 305 may determine the number of grants for EH procedure 320-a in accordance with Equation 9:

$$\#grants = \left\lceil \frac{\left(Py1 * \frac{X1}{\eta 1}\right) * PL1}{E_x} \right\rceil$$

In some examples, the ET UE 305 may multiplex data transmissions and energy signals for an EH procedure 320 maintain phase continuity. In some cases, the ET UE 305 may use a full configured time allocation for a given energy grant or a partial time allocation according to the techniques described herein.

**FIG. 4** illustrates an example of a fixed energy request timing diagram 400 that supports time-domain behavior and energy request indications for EH devices in accordance with one or more aspects of the present disclosure. In some examples, the fixed energy request timing diagram 400 may implement one or more aspects of wireless communications system 100 and wireless communications system 200, and multi-EH timing diagram 300. For instance, an ET UE 405 may be an example of a UE 115 as described with reference to FIG. 1 and an energy budget 410 and time period 425 may be respective examples of an energy budget 315 and a time period 330 with reference to FIG. 3. While examples are discussed herein, any number of devices and device types may be used to accomplish implementations described in the present disclosure.

In some examples, the ET UE 405 may indicate a number of energy requests 420 it may perform within the configure time period 425. In some cases, the time period 425 may be preconfigured at the ET UE 405 or configured via network signaling. In some examples of indicating the number of energy requests 420, the ET UE 405 may also indicate a number of energy units 415 that the ET UE 405 may fulfil for each energy request 420. In some examples, the ET UE 405 may indicate the number of energy requests 420, the time period 425, and the number of energy units 415 per request via L1, L2, or L3 signaling. Additionally, or alternatively, the ET UE 405 may report to an associated network entity 105 or associated EH UEs, a remaining number of energy requests 420 during the time period 425.

If an energy transfer design is based on a number of energy requests 420 and a number of energy units 415 per energy request 420, then the ET UE 405 may determine a number of energy units 415 it may use to perform non-EH operations. As such, the ET UE 405 may compute how many remaining energy units 415 it may use to fulfil energy requests 420. For example, if the ET UE 405 is configured to fulfil 10 energy requests with a defined number of energy units 415 for each, then an associated EH UE may request to a number of energy units less than or equal to 10. As such, based on a configuration of a number of energy units 415 per energy request 420, each associated EH UE may report a number of energy units 415 or a number of energy requests 420 in accordance with the configuration. In some examples, the ET UE 405 may also indicate a maximum number of energy requests 420 that each EH UE may transmit during a configured duration of time (e.g., E_T requests). In some cases, E_T requests may be configured by the network entity 105 or the ET UE 405 via L1, L2, and L3 signaling.

With reference to FIG. 3, based on a given IC for an EH UE having an RF-to-DC conversion of $\eta$ which may depend on the strength of input power, it may be advantageous to use a higher power level over short durations. As such, the ET UE 405 may configure the energy units 415 to have a power level above a first configured threshold and a time duration below a second configured threshold.

In the example of the fixed energy request timing diagram 400, the ET UE 405 may configure an energy budget 410-a including four energy units 415 for time period 425. The ET UE 405 may receive an energy request 420-a associated with a first EH UE that may request one energy unit 415. Based on performing an EH procedure with the first EH UE, the ET UE 405 may have an energy budget 410-b including three energy units 415. In some examples, the ET UE 405 may receive an energy request 420-b associated with a second EH UE that may request one energy unit 415. Based on performing an EH procedure with the second EH UE, the ET UE 405 may have an energy budget 410-c including two energy units 415. In some cases, at the end of the time period 425, the ET UE 405 may renew the energy units 415 for energy budget 410-d.

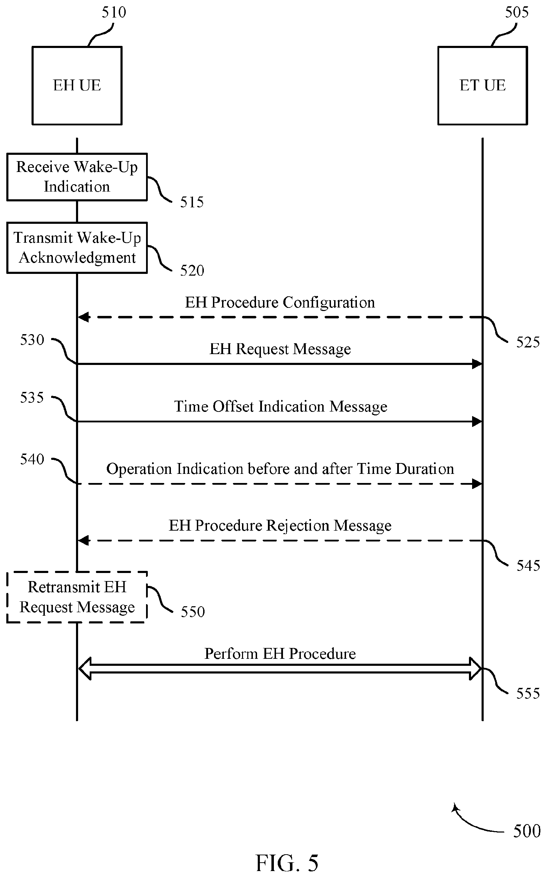

**FIG. 5** illustrates an example of a process flow 500 that supports time-domain behavior and energy request indications for EH devices in accordance with one or more aspects of the present disclosure. In some examples, process flow 500 may implement aspects of wireless communications system 100, wireless communications system 200, multi-EH timing diagram 300, fixed energy request timing diagram 400, or a combination thereof. Process flow 500 includes an ET UE 505 and an EH UE 510 which may be respective examples of UEs 115 with reference to FIG. 1. Alternative examples of the following may be implemented, where some steps are performed in a different order than described or are not performed at all. In some cases, steps may include additional features not mentioned below, or further steps may be added. In addition, while process flow 500 shows processes between a single ET UE 505 and a single EH UE 510, it should be understood that these processes may occur between any number of network devices and network device types.

At 515, the EH UE 510 may receive a wake-up indication (WUI) message from a network device (e.g., from an associated network entity 105, from the ET UE 505, or another wireless device associated with the EH UE 510). In some examples, the WUI may indicate for the EH UE 510 to wake-up from a sleep mode for a configured duration of time to perform one or more operations. At 520, the EH UE 510 may transmit to the network device a wake-up acknowledgment (WUA) message is response to the WUI message.

At 525, the EH UE 510 may receive an EH procedure configuration from the ET UE 505. For example, the EH procedure configuration may indicate a maximum quantity of requests for an EH procedure with the ET UE 505. In some examples, the EH procedure configuration may be sent directly from the ET UE 505 or relayed via the associated network entity 105.

At 530, the EH UE 510 may transmit a first indication of a time duration for the EH UE 510 to perform an EH procedure with the ET UE 505. In some examples, the first indication may include a time duration threshold that identifies a maximum duration of time for the EH UE 510 to perform the EH procedure. In some example, the time duration threshold may indicate a quantity of slots, minislots, symbols, subframes, frames, seconds, or any combination thereof.

At 535, the EH UE 510 may transmit a second indication of a set of time offsets, each time offset of the set of time offsets associated with an operation mode of a set of operation modes of the energy receiver device. In some examples, the EH UE 510 may transmit the first indication and the second indication in one EH request message.

At 540, the EH UE 510 may transmit a third indication of a first operation mode of the EH UE 510 applicable at the EH UE 510 before the time duration and a second operation mode applicable at the EH UE 510 after the time duration. In some examples, the EH UE 510 may transmit the first, second, and third indication directly to the ET UE 505 or via the associated network entity 105 serving as a relay.

In some examples, at 545, the EH UE 510 may receive a message from the ET UE 505 indicating that the ET UE 505 rejected to perform the EH procedure. Additionally, or alternatively, the EH UE 510 may not receive a response from the ET UE 505 to the first indication within a configured threshold.

As such, at 550, the EH UE 510 may retransmit the first indication based on not receiving a response to the first indication during a configured threshold or based on receiving the message rejecting the EH procedure. In some examples, the EH UE 510 may retransmit the first indication to the ET UE 505, to one or more other ET UE 505s, to the network entity 105 that may serve as a relay to the one or more other ET UE 505s, or a combination thereof.

At 555, the EH UE 510 and the ET UE 505 may perform the EH procedure during the time duration in accordance with the set of time offsets and associated operation modes of the set of operation modes.

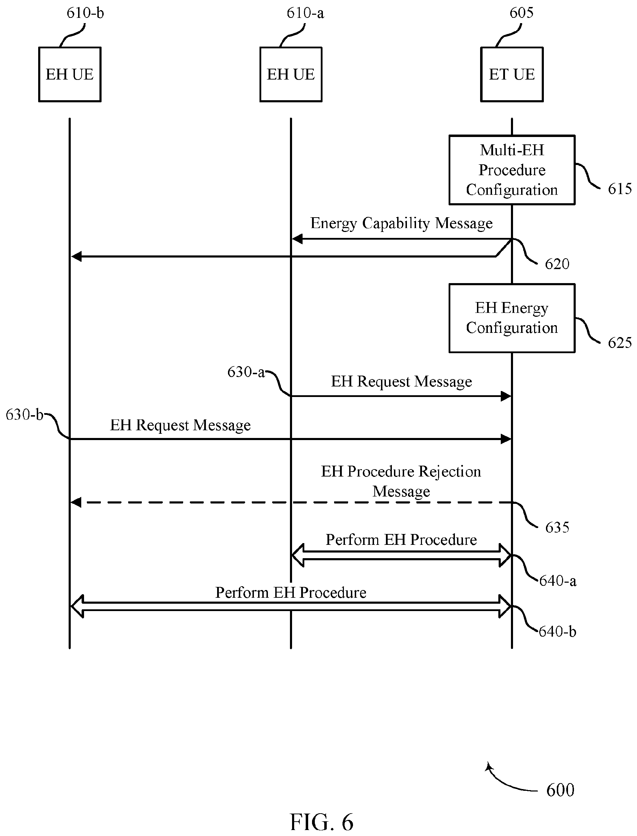

FIG. 6 illustrates an example of a process flow 600 that supports time-domain behavior and energy request indications for EH devices in accordance with one or more aspects of the present disclosure. In some examples, process flow 600 may implement aspects of wireless communications system 100, wireless communications system 200, multi-EH timing diagram 300, fixed energy request timing diagram 400, or a combination thereof. Process flow 600 includes an ET UE 605, an EH UE 610-a, and an EH UE 610-b which may be respective examples of UEs 115 with reference to FIG. 1. Alternative examples of the following may be implemented, where some steps are performed in a different order than described or are not performed at all. In some cases, steps may include additional features not mentioned below, or further steps may be added. In addition, while process flow 600 shows processes between a single ET UE 605 and two EH UEs 610, it should be understood that these processes may occur between any number of network devices and network device types.

At 615, the ET UE 605 may receive control signal indicating a procedure for performing multiple EH procedures for conflicting energy request messages. In some examples, the ET UE 605 may receive the control signal from an associated network entity 105 or from an EH UE 610. In some examples, the procedure for performing EH procedures for conflicting energy request messages may indicate to prioritize the EH procedures based on a quantity of energy requested and an associated time duration for each respective EH procedure of the multiple EH procedures.

At 620, the ET UE 605 may transmit an energy capability message to the EH UE 610-a and the EH UE 610-b. In some examples, the energy capability message may include an indication of an energy transmission capability of the ET UE 605, where the energy transmission capability may identify a first quantity of energy that the ET UE 605 may be able to provide to the EH UE 610-a and 610-b in a time duration of an EH procedure. In some examples, the ET UE 605 may also transmit (e.g., as part of the energy capability message or in separate control message) an indication of a quantity of EH procedures that may be performed during the time duration and a quantity of energy for each of the quantity of EH procedures.

Additionally, or alternatively, the ET UE 605 may transmit an update to the energy transmission capability, the update may change the first quantity of energy that the ET UE 605 may provide to the one or more EH UEs 610 in a second time duration of the EH procedure. In some examples, the first quantity of energy that the ET UE 605 may provide to the one or more EH UEs 610 may be based on one or more RF spectrum bands associated with the ET UE 605, one or more carriers associated with the ET UE 605, a waveform type used for the EH procedure, or any combination thereof.

At 625, the ET UE 605 may conduct an EH energy configuration. For example, the ET UE 605 may receive from the associated network entity 105, in response to the energy transmission capability, a control message identifying a configured quantity of energy for the ET UE 605 that may be less than or equal to the first quantity of energy. In some examples, the ET UE 605 may also receive an update to the configured quantity of energy based on a battery status of the ET UE 605, an operation mode of the ET UE 605, or both.

At 630, the ET UE 605 may receive an energy request message indicating a time associated with the time duration to perform the EH procedure and second quantity of energy for the EH procedure for an energy receiver device, the second quantity of energy based on the first quantity of energy identified by the energy transmission capability of the ET UE 605. In some examples, the second quantity of energy indicated in the energy request message may be based on the ET UE 605 indicating the quantity of energy for each of the quantity of EH procedures.

Additionally, or alternatively, the ET UE 605 may receive multiple energy request messages from multiple EH UEs 610. For example, at 630-a, the ET UE 605 may receive a first energy request message for EH UE 610-a indicating a third quantity of energy and a first time duration to perform a first EH procedure, and at 630-b, the ET UE 605 may receive a second energy request message for EH UE 610-b indicating a fourth quantity of energy and a second time duration to perform a second EH procedure. In some cases the first time duration and the second time duration may at least partially overlap in time. In some examples, a sum of the third quantity of energy and the fourth quantity of energy may be less than or equal to the first quantity of energy, and a sum of the first time duration and the second time duration may be less than or equal to the time duration.

In some cases, the ET UE 605 may receive a second EH request message (e.g., from the EH UE 610-b) indicating a second time at least partially outside the time duration to perform the EH procedure. As such, at 635, the ET UE 605 may transmit a message rejecting the second EH request message based on the second time being at least partially outside the time duration. Additionally, or alternatively, the ET UE 605 may perform in response to receiving the second EH request message, a partial EH procedure in accordance with the second time being at least partially outside the time duration.

At 640, the ET UE 605 may perform the multiple EH procedures with the multiple EH UEs 610. For example, at 640-a the ET UE 605 may perform the first EH procedure over the first time duration with the first energy receiver device in accordance with the procedure configured at 615. At 640-b, the ET UE 605 may perform the second EH procedure over the second time duration with the second energy receiver device in accordance with the procedure configured at 615. In some examples, the ET UE 605 may multiplex an EH procedure with a data transmission to a respective EH UE 610.

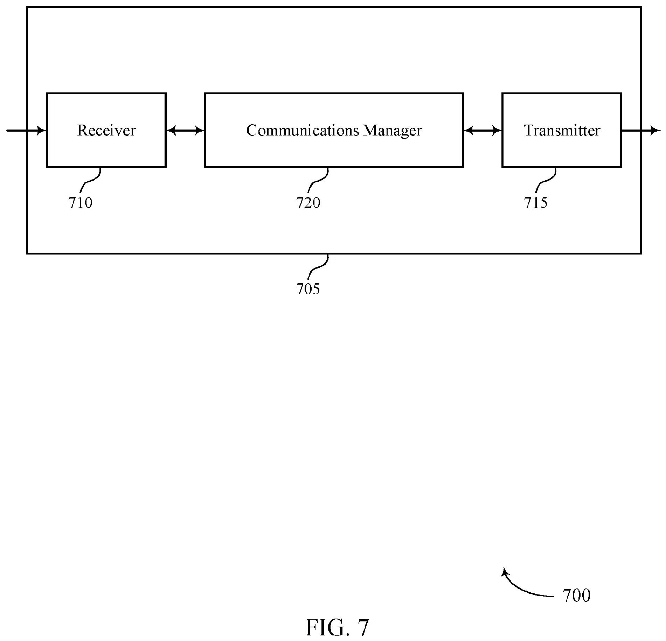

**FIG. 7** shows a block diagram 700 of a device 705 that supports time-domain behavior and energy request indications for EH devices in accordance with one or more aspects of the present disclosure. The device 705 may be an example of aspects of a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to time-domain behavior and energy request indications for EH devices). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to time-domain behavior and energy request indications for EH devices). In some examples, the transmitter 715 may be co-located with a receiver 710 in a transceiver module. The transmitter 715 may utilize a single antenna or a set of multiple antennas.

The communications manager 720, the receiver 710, the transmitter 715, or various combinations thereof or various components thereof may be examples of means for performing various aspects of time-domain behavior and energy request indications for EH devices as described herein. For example, the communications manager 720, the receiver 710, the transmitter 715, or various combinations or components thereof may support a method for performing one or more of the functions described herein.

In some examples, the communications manager 720, the receiver 710, the transmitter 715, or various combinations or components thereof may be implemented in hardware (e.g., in communications management circuitry). The hardware may include a processor, a digital signal processor (DSP), a central processing unit (CPU), a graphics processing unit (GPU), an application-specific integrated circuit (ASIC), a field-programmable gate array (FPGA) or other programmable logic device, a microcontroller, discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally, or alternatively, in some examples, the communications manager 720, the receiver 710, the transmitter 715, or various combinations or components thereof may be implemented in hardware, software (e.g., executed by a processor), or any combination thereof. If implemented in code executed by a processor, the functions of the communications manager 720, the receiver 710, the transmitter 715, or various combinations or components thereof may be performed by a general-purpose processor, a DSP, a CPU, an ASIC, an FPGA, a microcontroller, or any combination of these or other programmable logic devices (e.g., configured as or otherwise supporting a means for performing the functions described in the present disclosure).

In some examples, the communications manager 720 may be configured to perform various operations (e.g., receiving, obtaining, monitoring, outputting, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to obtain information, output information, or perform various other operations as described herein.

The communications manager 720 may support wireless communications at an energy receiver device in accordance with examples as disclosed herein. For example, the communications manager 720 may be configured as or otherwise support a means for transmitting a first indication of a time duration for the energy receiver device to perform an EH procedure with an ET device. The communications manager 720 may be configured as or otherwise support a means for transmitting a second indication of a set of time offsets, each time offset of the set of time offsets associated with an operation mode of a set of operation modes of the energy receiver device. The communications manager 720 may be configured as or otherwise support a means for performing the EH procedure during the time duration in accordance with the set of time offsets and associated operation modes of the set of operation modes.

Additionally, or alternatively, the communications manager 720 may support wireless communications at an ET device in accordance with examples as disclosed herein. For example, the communications manager 720 may be configured as or otherwise support a means for transmitting an indication of an energy transmission capability of the ET device, the energy transmission capability identifying a first quantity of energy that the ET device is able to provide to one or more energy receiver devices in a time duration of an EH procedure. The communications manager 720 may be configured as or otherwise support a means for receiving an energy request message indicating a time associated with the time duration to perform the EH procedure and second quantity of energy for the EH procedure for an energy receiver device, the second quantity of energy based on the first quantity of energy identified by the energy transmission capability of the ET device. The communications manager 720 may be configured as or otherwise support a means for performing, in response to receiving the energy request message, the EH procedure with the energy receiver device according to the second quantity of energy.

Additionally, or alternatively, the communications manager 720 may support wireless communications at a wireless device in accordance with examples as disclosed herein. For example, the communications manager 720 may be configured as or otherwise support a means for receiving a first indication of a time duration for an energy receiver device to perform an EH procedure with an ET device. The communications manager 720 may be configured as or otherwise support a means for receiving a second indication of a set of time offsets, each time offset of the set of time offsets associated with an operation mode of a set of operation modes of the energy receiver device.

Additionally, or alternatively, the communications manager 720 may support wireless communications at a wireless device in accordance with examples as disclosed herein. For example, the communications manager 720 may be configured as or otherwise support a means for receiving an indication of an energy transmission capability of an ET device, the energy transmission capability identifying a first quantity of energy that the ET device is able to provide to one or more energy receiver devices in a time duration of an EH procedure. The communications manager 720 may be configured as or otherwise support a means for transmitting an energy request message indicating a time associated with the time duration to perform the EH procedure and second quantity of energy for the EH procedure for an energy receiver device, the second quantity of energy based on the first quantity of energy identified by the energy transmission capability of the ET device.

By including or configuring the communications manager 720 in accordance with examples as described herein, the device 705 (e.g., a processor controlling or otherwise coupled with the receiver 710, the transmitter 715, the communications manager 720, or a combination thereof) may support techniques for improving communications associated with EH procedures which may result in reduced processing, reduced power consumption, and a more efficient utilization of communication resources.

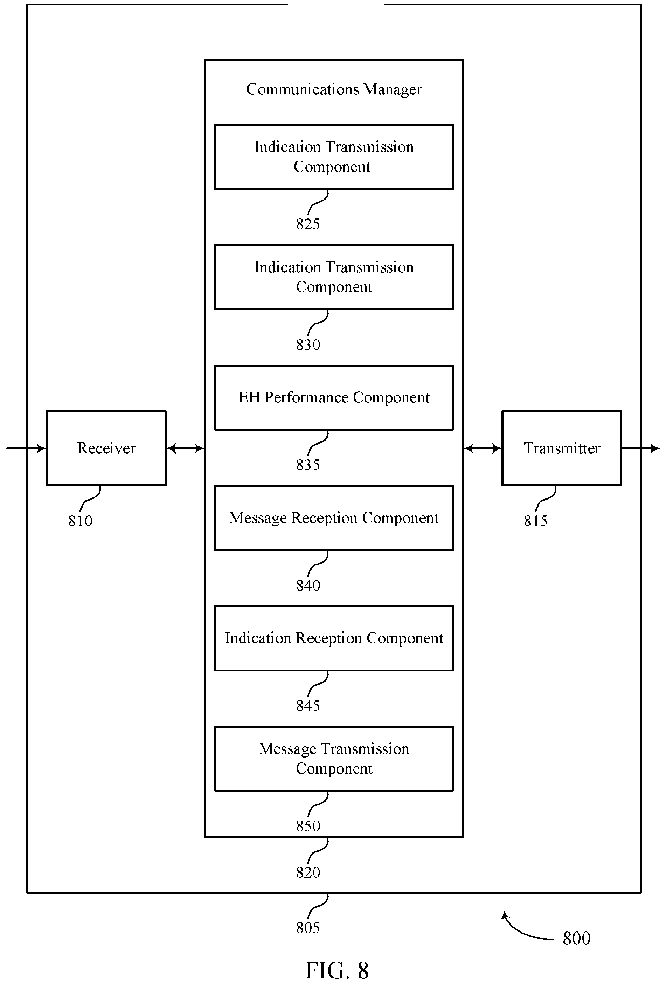

FIG. 8 shows a block diagram 800 of a device 805 that supports time-domain behavior and energy request indications for EH devices in accordance with one or more aspects of the present disclosure. The device 805 may be an example of aspects of a device 705 or a UE 115 as described herein. The device 805 may include a receiver 810, a transmitter 815, and a communications manager 820. The device 805 may also include a processor. Each of these components may be in communication with one another (e.g., via one or more buses).

The receiver 810 may provide a means for receiving information such as packets, user data, control information, or any combination thereof associated with various information channels (e.g., control channels, data channels, information channels related to time-domain behavior and energy request indications for EH devices). Information may be passed on to other components of the device 805. The receiver 810 may utilize a single antenna or a set of multiple antennas.

The transmitter 815 may provide a means for transmitting signals generated by other components of the device 805. For example, the transmitter 815 may transmit information such as packets, user data, control information, or any combination thereof associated with various information channels (e.g., control channels, data channels, information channels related to time-domain behavior and energy request indications for EH devices). In some examples, the transmitter 815 may be co-located with a receiver 810 in a transceiver module. The transmitter 815 may utilize a single antenna or a set of multiple antennas.

The device 805, or various components thereof, may be an example of means for performing various aspects of time-domain behavior and energy request indications for EH devices as described herein. For example, the communications manager 820 may include an indication transmission component 825, an indication transmission component 830, an EH performance component 835, a message reception component 840, an indication reception component 845, a message transmission component 850, or any combination thereof. The communications manager 820 may be an example of aspects of a communications manager 720 as described herein. In some examples, the communications manager 820, or various components thereof, may be configured to perform various operations (e.g., receiving, obtaining, monitoring, outputting, transmitting) using or otherwise in cooperation with the receiver 810, the transmitter 815, or both. For example, the communications manager 820 may receive information from the receiver 810, send information to the transmitter 815, or be integrated in combination with the receiver 810, the transmitter 815, or both to obtain information, output information, or perform various other operations as described herein.

The communications manager 820 may support wireless communications at an energy receiver device in accordance with examples as disclosed herein. The indication transmission component 825 may be configured as or otherwise support a means for transmitting a first indication of a time duration for the energy receiver device to perform an EH procedure with an ET device. The indication transmission component 830 may be configured as or otherwise support a means for transmitting a second indication of a set of time offsets, each time offset of the set of time offsets associated with an operation mode of a set of operation modes of the energy receiver device. The EH performance component 835 may be configured as or otherwise support a means for performing the EH procedure during the time duration in accordance with the set of time offsets and associated operation modes of the set of operation modes.

Additionally, or alternatively, the communications manager 820 may support wireless communications at an ET device in accordance with examples as disclosed herein. The indication transmission component 830 may be configured as or otherwise support a means for transmitting an indication of an energy transmission capability of the ET device, the energy transmission capability identifying a first quantity of energy that the ET device is able to provide to one or more energy receiver devices in a time duration of an EH procedure. The message reception component 840 may be configured as or otherwise support a means for receiving an energy request message indicating a time associated with the time duration to perform the EH procedure and second quantity of energy for the EH procedure for an energy receiver device, the second quantity of energy based on the first quantity of energy identified by the energy transmission capability of the ET device. The EH performance component 835 may be configured as or otherwise support a means for performing, in response to receiving the energy request message, the EH procedure with the energy receiver device according to the second quantity of energy.

Additionally, or alternatively, the communications manager 820 may support wireless communications at a wireless device in accordance with examples as disclosed herein. The indication reception component 845 may be configured as or otherwise support a means for receiving a first indication of a time duration for an energy receiver device to perform an EH procedure with an ET device. The indication reception component 845 may be configured as or otherwise support a means for receiving a second indication of a set of time offsets, each time offset of the set of time offsets associated with an operation mode of a set of operation modes of the energy receiver device.

Additionally, or alternatively, the communications manager 820 may support wireless communications at a wireless device in accordance with examples as disclosed herein. The indication reception component 845 may be configured as or otherwise support a means for receiving an indication of an energy transmission capability of an ET device, the energy transmission capability identifying a first quantity of energy that the ET device is able to provide to one or more energy receiver devices in a time duration of an EH procedure. The message transmission component 850 may be configured as or otherwise support a means for transmitting an energy request message indicating a time associated with the time duration to perform the EH procedure and second quantity of energy for the EH procedure for an energy receiver device, the second quantity of energy based on the first quantity of energy identified by the energy transmission capability of the ET device.

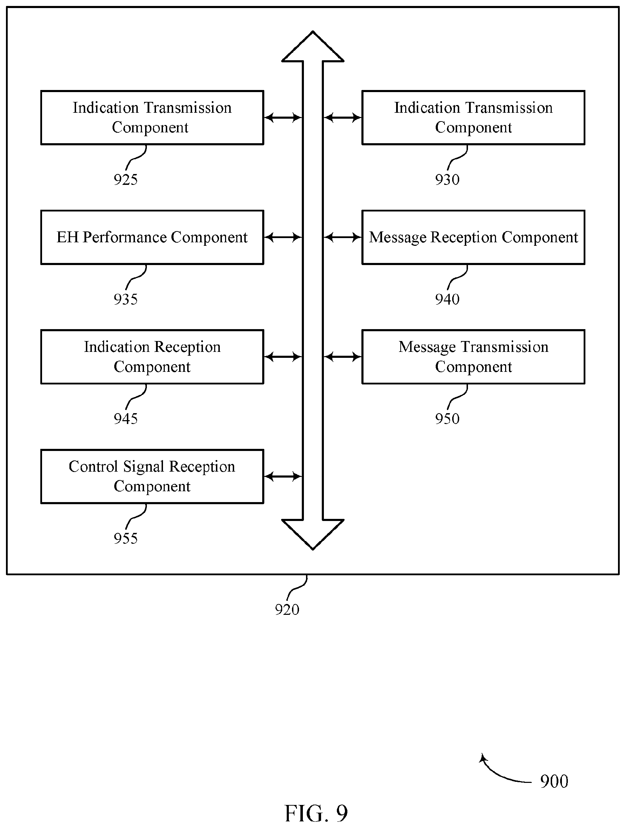

**FIG. 9** shows a block diagram 900 of a communications manager 920 that supports time-domain behavior and energy request indications for EH devices in accordance with one or more aspects of the present disclosure. The communications manager 920 may be an example of aspects of a communications manager 720, a communications manager 820, or both, as described herein. The communications manager 920, or various components thereof, may be an example of means for performing various aspects of time-domain behavior and energy request indications for EH devices as described herein. For example, the communications manager 920 may include an indication transmission component 925, an indication transmission component 930, an EH performance component 935, a message reception component 940, an indication reception component 945, a message transmission component 950, a control signal reception component 955, or any combination thereof. Each of these components may communicate, directly or indirectly, with one another (e.g., via one or more buses).

The communications manager 920 may support wireless communications at an energy receiver device in accordance with examples as disclosed herein. The indication transmission component 925 may be configured as or otherwise support a means for transmitting a first indication of a time duration for the energy receiver device to perform an EH procedure with an ET device. The indication transmission component 930 may be configured as or otherwise support a means for transmitting a second indication of a set of time offsets, each time offset of the set of time offsets associated with an operation mode of a set of operation modes of the energy receiver device. The EH performance component 935 may be configured as or otherwise support a means for performing the EH procedure during the time duration in accordance with the set of time offsets and associated operation modes of the set of operation modes.

In some examples, the indication transmission component 930 may be configured as or otherwise support a means for transmitting the first indication and the second indication in one EH request message.

In some examples, to support transmitting the first indication of the time duration, the indication transmission component 930 may be configured as or otherwise support a means for transmitting a time duration threshold that identifies a maximum duration of time for the energy receiver device to perform the EH procedure.

In some examples, the time duration threshold indicates a quantity of slots, minislots, symbols, subframes, frames, seconds, or any combination thereof.

In some examples, the indication transmission component 930 may be configured as or otherwise support a means for retransmitting the first indication based on not receiving a response to the first indication during a configured threshold.

In some examples, the message reception component 940 may be configured as or otherwise support a means for receiving a message indicating that the ET device rejected to perform the EH procedure. In some examples, the indication transmission component 930 may be configured as or otherwise support a means for retransmitting the first indication of the time duration for the energy receiver device to perform the EH procedure with a second ET device in response to receiving the message.

In some examples, the indication transmission component 930 may be configured as or otherwise support a means for transmitting a third indication of a first operation mode of the energy receiver device applicable at the energy receiver device before the time duration and a second operation mode applicable at the energy receiver device after the time duration.

In some examples, the message reception component 940 may be configured as or otherwise support a means for receiving an indication of a maximum quantity of requests for the EH procedure with the ET device.

Additionally, or alternatively, the communications manager 920 may support wireless communications at an ET device in accordance with examples as disclosed herein. In some examples, the indication transmission component 930 may be configured as or otherwise support a means for transmitting an indication of an energy transmission capability of the ET device, the energy transmission capability identifying a first quantity of energy that the ET device is able to provide to one or more energy receiver devices in a time duration of an EH procedure. The message reception component 940 may be configured as or otherwise support a means for receiving an energy request message indicating a time associated with the time duration to perform the EH procedure and second quantity of energy for the EH procedure for an energy receiver device, the second quantity of energy based on the first quantity of energy identified by the energy transmission capability of the ET device. In some examples, the EH performance component 935 may be configured as or otherwise support a means for performing, in response to receiving the energy request message, the EH procedure with the energy receiver device according to the second quantity of energy.

In some examples, the control signal reception component 955 may be configured as or otherwise support a means for receiving a control signal indicating a procedure for performing a set of multiple EH procedures for conflicting energy request messages.

In some examples, the message reception component 940 may be configured as or otherwise support a means for receiving a first energy request message for a first energy receiver device indicating a third quantity of energy and a first time duration to perform a first EH procedure. In some examples, the message reception component 940 may be configured as or otherwise support a means for receiving a second energy request message for a second energy receiver device indicating a fourth quantity of energy and a second time duration to perform a second EH procedure, where the first time duration and the second time duration at least partially overlap in time. In some examples, the EH performance component 935 may be configured as or otherwise support a means for performing the first EH procedure over the first time duration with the first energy receiver device in accordance with the procedure. In some examples, the EH performance component 935 may be configured as or otherwise support a means for performing the second EH procedure over the second time duration with the second energy receiver device in accordance with the procedure.

In some examples, a sum of the third quantity of energy and the fourth quantity of energy is less than or equal to the first quantity of energy, and a sum of the first time duration and the second time duration is less than or equal to the time duration.

In some examples, the procedure for performing EH procedures for conflicting energy request messages indicates to prioritize the EH procedures based on a quantity of energy requested and an associated time duration for each respective EH procedure of the set of multiple EH procedures.

In some examples, the message reception component 940 may be configured as or otherwise support a means for receiving a second EH request message indicating a second time at least partially outside the time duration to perform the EH procedure.

In some examples, the message transmission component 950 may be configured as or otherwise support a means for transmitting a message rejecting the second EH request message based on the second time being at least partially outside the time duration.

In some examples, performing in response to receiving the second EH request message a partial EH procedure in accordance with the second time being at least partially outside the time duration.

In some examples, the message reception component 940 may be configured as or otherwise support a means for receiving, from a network entity at least in part in response to the energy transmission capability, a control message identifying a configured quantity of energy for the ET device that is less than or equal to the first quantity of energy.

In some examples, the message reception component 940 may be configured as or otherwise support a means for receiving an update to the configured quantity of energy based on a battery status of the ET device, an operation mode of the ET device, or both.

In some examples, to support transmitting the indication of the energy transmission capability, the indication transmission component 930 may be configured as or otherwise support a means for transmitting an indication of a quantity of EH procedures that can be performed during the time duration and a quantity of energy for each of the quantity of EH procedures.

In some examples, the second quantity of energy indicated in the energy request message is based on the ET device indicating the quantity of energy for each of the quantity of EH procedures.

In some examples, the indication transmission component 930 may be configured as or otherwise support a means for transmitting an update to the energy transmission capability, the update changing the first quantity of energy that the ET device is able to provide to the one or more energy receiver devices in a second time duration of the EH procedure.

In some examples, the EH procedure is multiplexed with a data transmission.

In some examples, the first quantity of energy that the ET device is able to provide to the one or more energy receiver devices is based on one or more radio frequency spectrum bands associated with the energy transmitter device, one or more carriers associated with the energy transmitter device, a waveform or modulation type associated with the energy harvesting procedure, a communication duplexity type or mode associated with the energy harvesting procedure, or any combination thereof.

Additionally, or alternatively, the communications manager 920 may support wireless communications at a wireless device in accordance with examples as disclosed herein. The indication reception component 945 may be configured as or otherwise support a means for receiving a first indication of a time duration for an energy receiver device to perform an EH procedure with an ET device. In some examples, the indication reception component 945 may be configured as or otherwise support a means for receiving a second indication of a set of time offsets, each time offset of the set of time offsets associated with an operation mode of a set of operation modes of the energy receiver device.

In some examples, the wireless device includes a network entity, and the indication transmission component 930 may be configured as or otherwise support a means for transmitting, to the ET device, the first indication and the second indication.

In some examples, the wireless device includes the ET device, and the EH performance component 935 may be configured as or otherwise support a means for performing the EH procedure during the time duration in accordance with the set of time offsets and associated operation modes of the set of operation modes.

In some examples, the wireless device includes the ET device, and the message transmission component 950 may be configured as or otherwise support a means for transmitting a message rejecting the EH procedure based on the time duration, the set of time offsets, or both, failing to satisfy a threshold.

Additionally, or alternatively, the communications manager 920 may support wireless communications at a wireless device in accordance with examples as disclosed herein. In some examples, the indication reception component 945 may be configured as or otherwise support a means for receiving an indication of an energy transmission capability of an ET device, the energy transmission capability identifying a first quantity of energy that the ET device is able to provide to one or more energy receiver devices in a time duration of an EH procedure. The message transmission component 950 may be configured as or otherwise support a means for transmitting an energy request message indicating a time associated with the time duration to perform the EH procedure and second quantity of energy for the EH procedure for an energy receiver device, the second quantity of energy based on the first quantity of energy identified by the energy transmission capability of the ET device.

In some examples, the wireless device includes the ET device, and the EH performance component 935 may be configured as or otherwise support a means for performing, in response to receiving the energy request message, the EH procedure with the energy receiver device according to the second quantity of energy.

In some examples, the wireless device includes a network entity, and the message transmission component 950 may be configured as or otherwise support a means for transmitting the energy request message to the ET device.

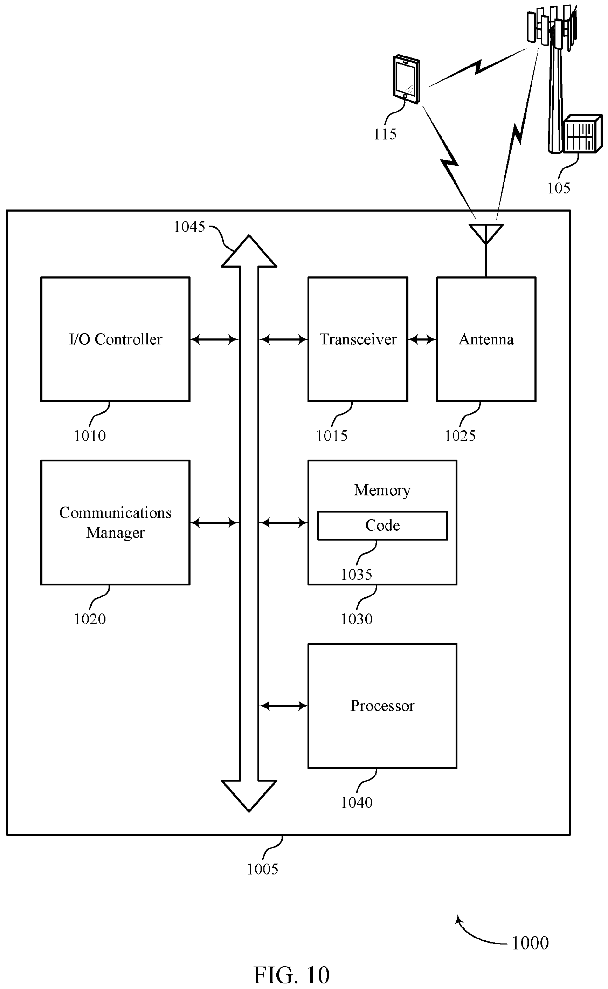

**FIG. 10** shows a diagram of a system 1000 including a device 1005 that supports time-domain behavior and energy request indications for EH devices in accordance with one or more aspects of the present disclosure. The device 1005 may be an example of or include the components of a device 705, a device 805, or a UE 115 as described herein. The device 1005 may communicate (e.g., wirelessly) with one or more network entities 105, one or more UEs 115, or any combination thereof. The device 1005 may include components for bi-directional voice and data communications including components for transmitting and receiving communications, such as a communications manager 1020, an input/output (I/O) controller 1010, a transceiver 1015, an antenna 1025, a memory 1030, code 1035, and a processor 1040. These components may be in electronic communication or otherwise coupled (e.g., operatively, communicatively, functionally, electronically, electrically) via one or more buses (e.g., a bus 1045).

The I/O controller 1010 may manage input and output signals for the device 1005. The I/O controller 1010 may also manage peripherals not integrated into the device 1005. In some cases, the I/O controller 1010 may represent a physical connection or port to an external peripheral. In some cases, the I/O controller 1010 may utilize an operating system such as iOS®, ANDROID®, MS-DOS®, MS-WINDOWS®, OS/2®, UNIX®, LINUX®, or another known operating system. Additionally, or alternatively, the I/O controller 1010 may represent or interact with a modem, a keyboard, a mouse, a touchscreen, or a similar device. In some cases, the I/O controller 1010 may be implemented as part of a processor, such as the processor 1040. In some cases, a user may interact with the device 1005 via the I/O controller 1010 or via hardware components controlled by the I/O controller 1010.

In some cases, the device 1005 may include a single antenna 1025. However, in some other cases, the device 1005 may have more than one antenna 1025, which may be capable of concurrently transmitting or receiving multiple wireless transmissions. The transceiver 1015 may communicate bi-directionally, via the one or more antennas 1025, wired, or wireless links as described herein. For example, the transceiver 1015 may represent a wireless transceiver and may communicate bi-directionally with another wireless transceiver. The transceiver 1015 may also include a modem to modulate the packets, to provide the modulated packets to one or more antennas 1025 for transmission, and to demodulate packets received from the one or more antennas 1025. The transceiver 1015, or the transceiver 1015 and one or more antennas 1025, may be an example of a transmitter 715, a transmitter 815, a receiver 710, a receiver 810, or any combination thereof or component thereof, as described herein.

The memory 1030 may include random access memory (RAM) and read-only memory (ROM). The memory 1030 may store computer-readable, computer-executable code 1035 including instructions that, when executed by the processor 1040, cause the device 1005 to perform various functions described herein. The code 1035 may be stored in a non-transitory computer-readable medium such as system memory or another type of memory. In some cases, the code 1035 may not be directly executable by the processor 1040 but may cause a computer (e.g., when compiled and executed) to perform functions described herein. In some cases, the memory 1030 may contain, among other things, a basic I/O system (BIOS) which may control basic hardware or software operation such as the interaction with peripheral components or devices.

The processor 1040 may include an intelligent hardware device (e.g., a general-purpose processor, a DSP, a CPU, a GPU, a microcontroller, an ASIC, an FPGA, a programmable logic device, a discrete gate or transistor logic component, a discrete hardware component, or any combination thereof). In some cases, the processor 1040 may be configured to operate a memory array using a memory controller. In some other cases, a memory controller may be integrated into the processor 1040. The processor 1040 may be configured to execute computer-readable instructions stored in a memory (e.g., the memory 1030) to cause the device 1005 to perform various functions (e.g., functions or tasks supporting time-domain behavior and energy request indications for EH devices). For example, the device 1005 or a component of the device 1005 may include a processor 1040 and memory 1030 coupled with or to the processor 1040, the processor 1040 and memory 1030 configured to perform various functions described herein.

The communications manager 1020 may support wireless communications at an energy receiver device in accordance with examples as disclosed herein. For example, the communications manager 1020 may be configured as or otherwise support a means for transmitting a first indication of a time duration for the energy receiver device to perform an EH procedure with an ET device. The communications manager 1020 may be configured as or otherwise support a means for transmitting a second indication of a set of time offsets, each time offset of the set of time offsets associated with an operation mode of a set of operation modes of the energy receiver device. The communications manager 1020 may be configured as or otherwise support a means for performing the EH procedure during the time duration in accordance with the set of time offsets and associated operation modes of the set of operation modes.

Additionally, or alternatively, the communications manager 1020 may support wireless communications at an ET device in accordance with examples as disclosed herein. For example, the communications manager 1020 may be configured as or otherwise support a means for transmitting an indication of an energy transmission capability of the ET device, the energy transmission capability identifying a first quantity of energy that the ET device is able to provide to one or more energy receiver devices in a time duration of an EH procedure. The communications manager 1020 may be configured as or otherwise support a means for receiving an energy request message indicating a time associated with the time duration to perform the EH procedure and second quantity of energy for the EH procedure for an energy receiver device, the second quantity of energy based on the first quantity of energy identified by the energy transmission capability of the ET device. The communications manager 1020 may be configured as or otherwise support a means for performing, in response to receiving the energy request message, the EH procedure with the energy receiver device according to the second quantity of energy.

Additionally, or alternatively, the communications manager 1020 may support wireless communications at a wireless device in accordance with examples as disclosed herein. For example, the communications manager 1020 may be configured as or otherwise support a means for receiving a first indication of a time duration for an energy receiver device to perform an EH procedure with an ET device. The communications manager 1020 may be configured as or otherwise support a means for receiving a second indication of a set of time offsets, each time offset of the set of time offsets associated with an operation mode of a set of operation modes of the energy receiver device.

Additionally, or alternatively, the communications manager 1020 may support wireless communications at a wireless device in accordance with examples as disclosed herein. For example, the communications manager 1020 may be configured as or otherwise support a means for receiving an indication of an energy transmission capability of an ET device, the energy transmission capability identifying a first quantity of energy that the ET device is able to provide to one or more energy receiver devices in a time duration of an EH procedure. The communications manager 1020 may be configured as or otherwise support a means for transmitting an energy request message indicating a time associated with the time duration to perform the EH procedure and second quantity of energy for the EH procedure for an energy receiver device, the second quantity of energy based on the first quantity of energy identified by the energy transmission capability of the ET device.

By including or configuring the communications manager 1020 in accordance with examples as described herein, the device 1005 may support techniques for improving communications associated with EH procedures which may result in improved communication reliability, reduced latency, improved user experience related to reduced processing, reduced power consumption, more efficient utilization of communication resources, improved coordination between devices, longer battery life, and improved utilization of processing capability.

In some examples, the communications manager 1020 may be configured to perform various operations (e.g., receiving, monitoring, transmitting) using or otherwise in cooperation with the transceiver 1015, the one or more antennas 1025, or any combination thereof. Although the communications manager 1020 is illustrated as a separate component, in some examples, one or more functions described with reference to the communications manager 1020 may be supported by or performed by the processor 1040, the memory 1030, the code 1035, or any combination thereof. For example, the code 1035 may include instructions executable by the processor 1040 to cause the device 1005 to perform various aspects of time-domain behavior and energy request indications for EH devices as described herein, or the processor 1040 and the memory 1030 may be otherwise configured to perform or support such operations.

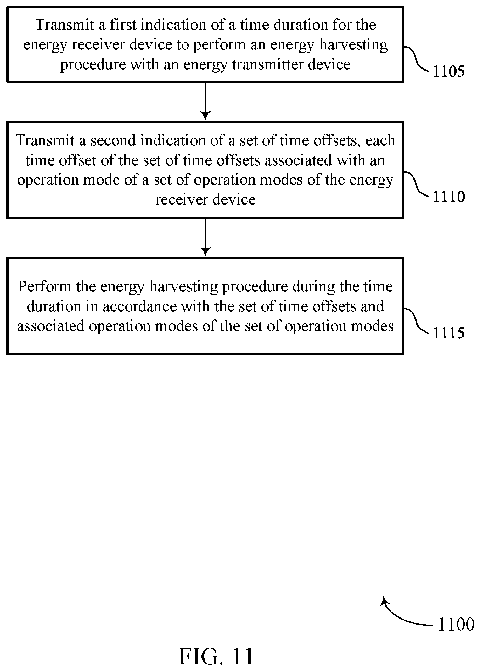

**FIG. 11** shows a flowchart illustrating a method 1100 that supports time-domain behavior and energy request indications for EH devices in accordance with one or more aspects of the present disclosure. The operations of the method 1100 may be implemented by a UE or its components as described herein. For example, the operations of the method 1100 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1105, the method may include transmitting a first indication of a time duration for the energy receiver device to perform an EH procedure with an ET device. The operations of 1105 may be performed in accordance with examples as disclosed herein. In some examples, aspects of the operations of 1105 may be performed by an indication transmission component 925 as described with reference to FIG. 9.

At 1110, the method may include transmitting a second indication of a set of time offsets, each time offset of the set of time offsets associated with an operation mode of a set of operation modes of the energy receiver device. The operations of 1110 may be performed in accordance with examples as disclosed herein. In some examples, aspects of the operations of 1110 may be performed by an indication transmission component 930 as described with reference to FIG. 9.

At 1115, the method may include performing the EH procedure during the time duration in accordance with the set of time offsets and associated operation modes of the set of operation modes. The operations of 1115 may be performed in accordance with examples as disclosed herein. In some examples, aspects of the operations of 1115 may be performed by an EH performance component 935 as described with reference to FIG. 9.

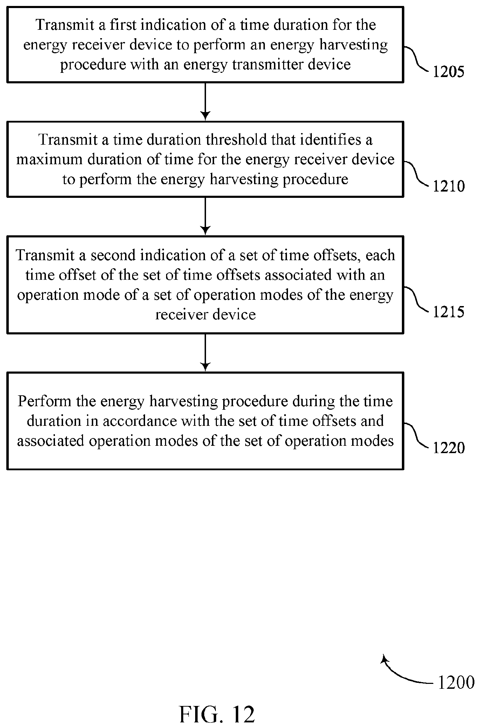

**FIG. 12** shows a flowchart illustrating a method 1200 that supports time-domain behavior and energy request indications for EH devices in accordance with one or more aspects of the present disclosure. The operations of the method 1200 may be implemented by a UE or its components as described herein. For example, the operations of the method 1200 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1205, the method may include transmitting a first indication of a time duration for the energy receiver device to perform an EH procedure with an ET device. The operations of 1205 may be performed in accordance with examples as disclosed herein. In some examples, aspects of the operations of 1205 may be performed by an indication transmission component 925 as described with reference to FIG. 9.

At 1210, the method may include transmitting a time duration threshold that identifies a maximum duration of time for the energy receiver device to perform the EH procedure. The operations of 1210 may be performed in accordance with examples as disclosed herein. In some examples, aspects of the operations of 1210 may be performed by an indication transmission component 930 as described with reference to FIG. 9.

At 1215, the method may include transmitting a second indication of a set of time offsets, each time offset of the set of time offsets associated with an operation mode of a set of operation modes of the energy receiver device. The operations of 1215 may be performed in accordance with examples as disclosed herein. In some examples, aspects of the operations of 1215 may be performed by an indication transmission component 930 as described with reference to FIG. 9.

At 1220, the method may include performing the EH procedure during the time duration in accordance with the set of time offsets and associated operation modes of the set of operation modes. The operations of 1220 may be performed in accordance with examples as disclosed herein. In some examples, aspects of the operations of 1220 may be performed by an EH performance component 935 as described with reference to FIG. 9.

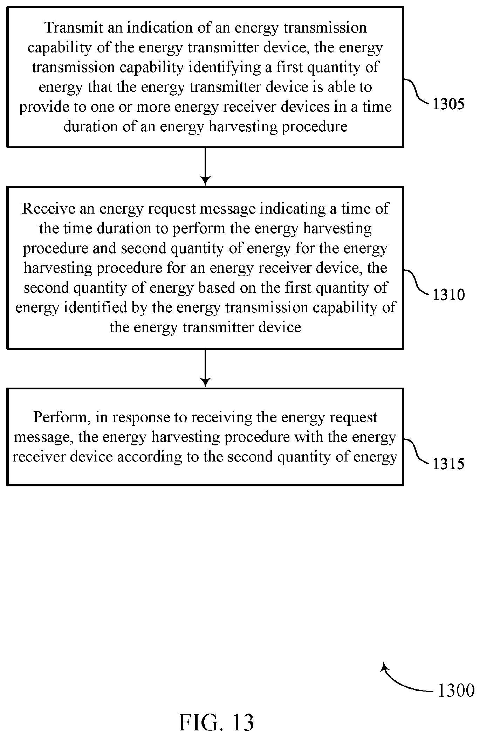

**FIG. 13** shows a flowchart illustrating a method 1300 that supports time-domain behavior and energy request indications for EH devices in accordance with one or more aspects of the present disclosure. The operations of the method 1300 may be implemented by a UE or its components as described herein. For example, the operations of the method 1300 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1305, the method may include transmitting an indication of an energy transmission capability of the ET device, the energy transmission capability identifying a first quantity of energy that the ET device is able to provide to one or more energy receiver devices in a time duration of an EH procedure. The operations of 1305 may be performed in accordance with examples as disclosed herein. In some examples, aspects of the operations of 1305 may be performed by an indication transmission component 930 as described with reference to FIG. 9.

At 1310, the method may include receiving an energy request message indicating a time associated with the time duration to perform the EH procedure and second quantity of energy for the EH procedure for an energy receiver device, the second quantity of energy based on the first quantity of energy identified by the energy transmission capability of the ET device. The operations of 1310 may be performed in accordance with examples as disclosed herein. In some examples, aspects of the operations of 1310 may be performed by a message reception component 940 as described with reference to FIG. 9.

At 1315, the method may include performing, in response to receiving the energy request message, the EH procedure with the energy receiver device according to the second quantity of energy. The operations of 1315 may be performed in accordance with examples as disclosed herein. In some examples, aspects of the operations of 1315 may be performed by an EH performance component 935 as described with reference to FIG. 9.

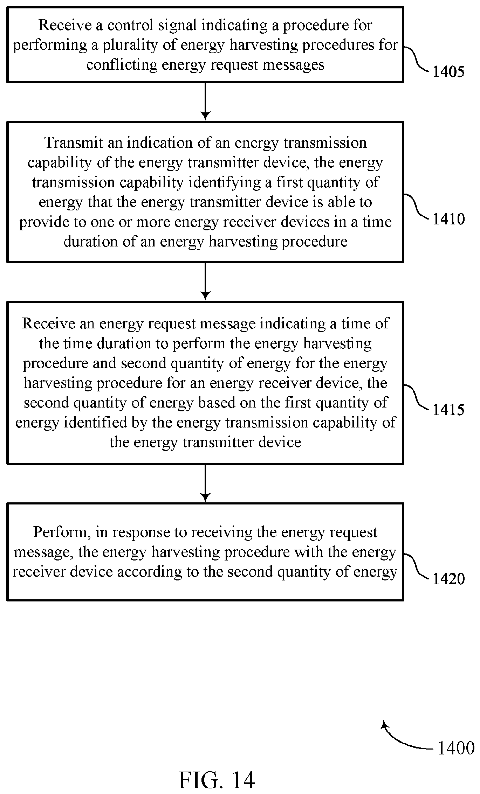

**FIG. 14** shows a flowchart illustrating a method 1400 that supports time-domain behavior and energy request indications for EH devices in accordance with one or more aspects of the present disclosure. The operations of the method 1400 may be implemented by a UE or its components as described herein. For example, the operations of the method 1400 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1405, the method may include receiving a control signal indicating a procedure for performing a set of multiple EH procedures for conflicting energy request messages. The operations of 1405 may be performed in accordance with examples as disclosed herein. In some examples, aspects of the operations of 1405 may be performed by a control signal reception component 955 as described with reference to FIG. 9.

At 1410, the method may include transmitting an indication of an energy transmission capability of the ET device, the energy transmission capability identifying a first quantity of energy that the ET device is able to provide to one or more energy receiver devices in a time duration of an EH procedure. The operations of 1410 may be performed in accordance with examples as disclosed herein. In some examples, aspects of the operations of 1410 may be performed by an indication transmission component 930 as described with reference to FIG. 9.

At 1415, the method may include receiving an energy request message indicating a time associated with the time duration to perform the EH procedure and second quantity of energy for the EH procedure for an energy receiver device, the second quantity of energy based on the first quantity of energy identified by the energy transmission capability of the ET device. The operations of 1415 may be performed in accordance with examples as disclosed herein. In some examples, aspects of the operations of 1415 may be performed by a message reception component 940 as described with reference to FIG. 9.

At 1420, the method may include performing, in response to receiving the energy request message, the EH procedure with the energy receiver device according to the second quantity of energy. The operations of 1420 may be performed in accordance with examples as disclosed herein. In some examples, aspects of the operations of 1420 may be performed by an EH performance component 935 as described with reference to FIG. 9.

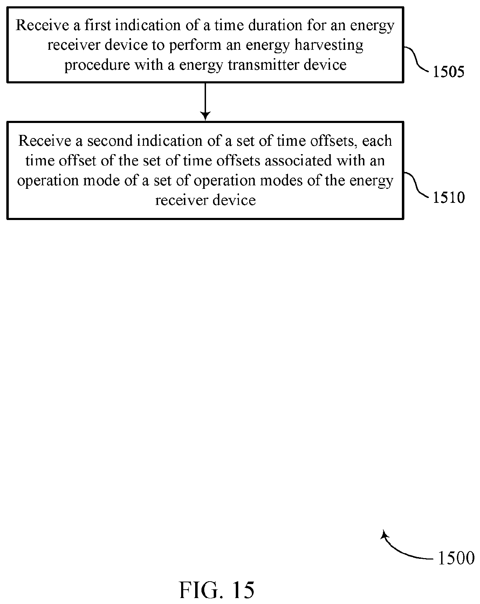

**FIG. 15** shows a flowchart illustrating a method 1500 that supports time-domain behavior and energy request indications for EH devices in accordance with one or more aspects of the present disclosure. The operations of the method 1500 may be implemented by a UE or its components as described herein. For example, the operations of the method 1500 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1505, the method may include receiving a first indication of a time duration for an energy receiver device to perform an EH procedure with an ET device. The operations of 1505 may be performed in accordance with examples as disclosed herein. In some examples, aspects of the operations of 1505 may be performed by an indication reception component 945 as described with reference to FIG. 9.

At 1510, the method may include receiving a second indication of a set of time offsets, each time offset of the set of time offsets associated with an operation mode of a set of operation modes of the energy receiver device. The operations of 1510 may be performed in accordance with examples as disclosed herein. In some examples, aspects of the operations of 1510 may be performed by an indication reception component 945 as described with reference to FIG. 9.

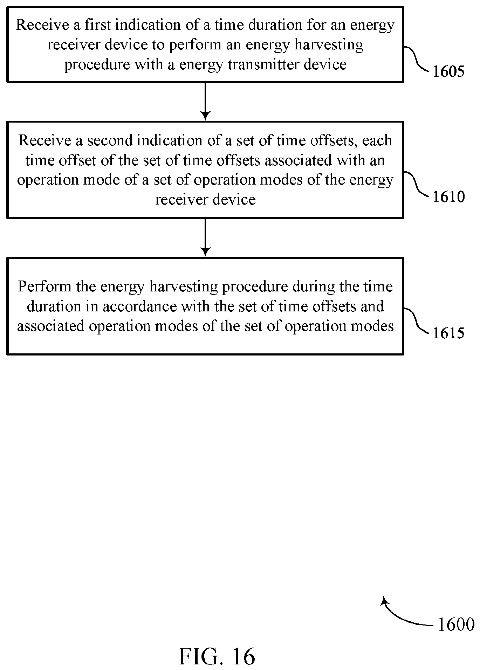

**FIG. 16** shows a flowchart illustrating a method 1600 that supports time-domain behavior and energy request indications for EH devices in accordance with one or more aspects of the present disclosure. The operations of the method 1600 may be implemented by a UE or its components as described herein. For example, the operations of the method 1600 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1605, the method may include receiving a first indication of a time duration for an energy receiver device to perform an EH procedure with an ET device. The operations of 1605 may be performed in accordance with examples as disclosed herein. In some examples, aspects of the operations of 1605 may be performed by an indication reception component 945 as described with reference to FIG. 9.

At 1610, the method may include receiving a second indication of a set of time offsets, each time offset of the set of time offsets associated with an operation mode of a set of operation modes of the energy receiver device. The operations of 1610 may be performed in accordance with examples as disclosed herein. In some examples, aspects of the operations of 1610 may be performed by an indication reception component 945 as described with reference to FIG. 9.

At 1615, the method may include performing the EH procedure during the time duration in accordance with the set of time offsets and associated operation modes of the set of operation modes. The operations of 1615 may be performed in accordance with examples as disclosed herein. In some examples, aspects of the operations of 1615 may be performed by an EH performance component 935 as described with reference to FIG. 9.

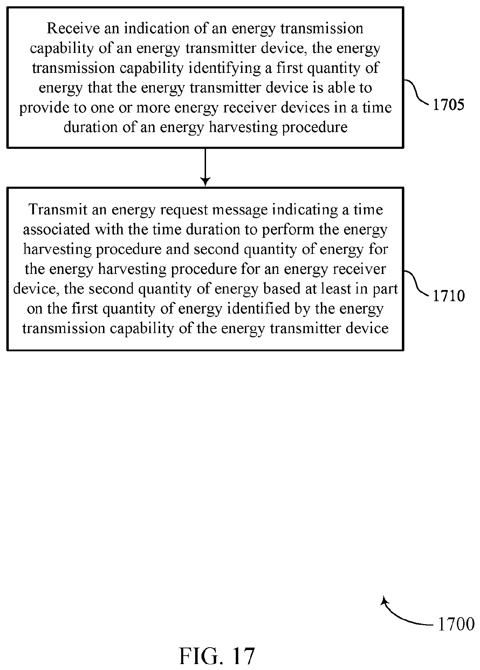

**FIG. 17** shows a flowchart illustrating a method 1700 that supports time-domain behavior and energy request indications for EH devices in accordance with one or more aspects of the present disclosure. The operations of the method 1700 may be implemented by a UE or its components as described herein. For example, the operations of the method 1700 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1705, the method may include receiving an indication of an energy transmission capability of an ET device, the energy transmission capability identifying a first quantity of energy that the ET device is able to provide to one or more energy receiver devices in a time duration of an EH procedure. The operations of 1705 may be performed in accordance with examples as disclosed herein. In some examples, aspects of the operations of 1705 may be performed by an indication reception component 945 as described with reference to FIG. 9.

At 1710, the method may include transmitting an energy request message indicating a time associated with the time duration to perform the EH procedure and second quantity of energy for the EH procedure for an energy receiver device, the second quantity of energy based on the first quantity of energy identified by the energy transmission capability of the ET device. The operations of 1710 may be performed in accordance with examples as disclosed herein. In some examples, aspects of the operations of 1710 may be performed by a message transmission component 950 as described with reference to FIG. 9.

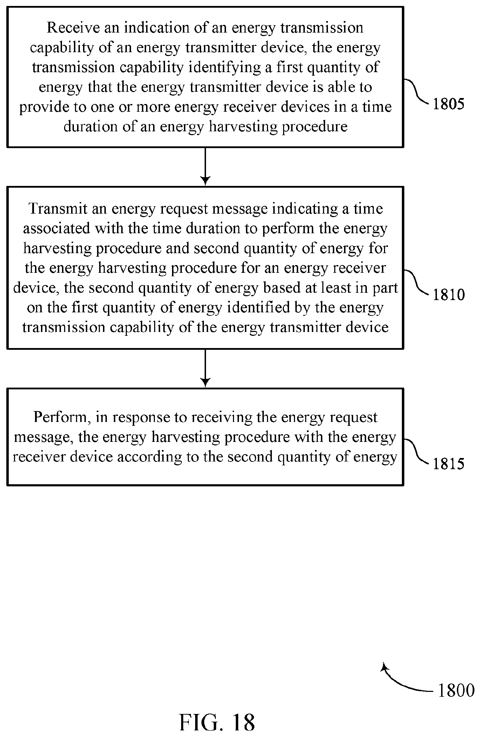

**FIG. 18** shows a flowchart illustrating a method 1800 that supports time-domain behavior and energy request indications for EH devices in accordance with one or more aspects of the present disclosure. The operations of the method 1800 may be implemented by a UE or its components as described herein. For example, the operations of the method 1800 may be performed by a UE 115 as described with reference to FIGs. 1 through 10. In some examples, a UE may execute a set of instructions to control the functional elements of the UE to perform the described functions. Additionally, or alternatively, the UE may perform aspects of the described functions using special-purpose hardware.

At 1805, the method may include receiving an indication of an energy transmission capability of an ET device, the energy transmission capability identifying a first quantity of energy that the ET device is able to provide to one or more energy receiver devices in a time duration of an EH procedure. The operations of 1805 may be performed in accordance with examples as disclosed herein. In some examples, aspects of the operations of 1805 may be performed by an indication reception component 945 as described with reference to FIG. 9.

At 1810, the method may include transmitting an energy request message indicating a time associated with the time duration to perform the EH procedure and second quantity of energy for the EH procedure for an energy receiver device, the second quantity of energy based on the first quantity of energy identified by the energy transmission capability of the ET device. The operations of 1810 may be performed in accordance with examples as disclosed herein. In some examples, aspects of the operations of 1810 may be performed by a message transmission component 950 as described with reference to FIG. 9.

At 1815, the method may include performing, in response to receiving the energy request message, the EH procedure with the energy receiver device according to the second quantity of energy. The operations of 1815 may be performed in accordance with examples as disclosed herein. In some examples, aspects of the operations of 1815 may be performed by an EH performance component 935 as described with reference to FIG. 9.

The following provides an overview of aspects of the present disclosure:

Aspect 1: A method for wireless communications at an energy receiver device, comprising: transmitting a first indication of a time duration for the energy receiver device to perform an EH procedure with an ET device; transmitting a second indication of a set of time offsets, each time offset of the set of time offsets associated with an operation mode of a set of operation modes of the energy receiver device; and performing the EH procedure during the time duration in accordance with the set of time offsets and associated operation modes of the set of operation modes.

Aspect 2: The method of aspect 1, further comprising: transmitting the first indication and the second indication in one EH request message.

Aspect 3: The method of any of aspects 1 through 2, wherein transmitting the first indication of the time duration further comprises: transmitting a time duration threshold that identifies a maximum duration of time for the energy receiver device to perform the EH procedure.

Aspect 4: The method of aspect 3, wherein the time duration threshold indicates a quantity of slots, minislots, symbols, subframes, frames, seconds, or any combination thereof.

Aspect 5: The method of any of aspects 1 through 4, further comprising: retransmitting the first indication based at least in part on not receiving a response to the first indication during a configured threshold.

Aspect 6: The method of any of aspects 1 through 5, further comprising: receiving a message indicating that the ET device rejected to perform the EH procedure; and retransmitting the first indication of the time duration for the energy receiver device to perform the EH procedure with a second ET device in response to receiving the message.

Aspect 7: The method of any of aspects 1 through 6, further comprising: transmitting a third indication of a first operation mode of the energy receiver device applicable at the energy receiver device before the time duration and a second operation mode applicable at the energy receiver device after the time duration.

Aspect 8: The method of any of aspects 1 through 7, further comprising: receiving an indication of a maximum quantity of requests for the EH procedure with the ET device.

Aspect 9: A method for wireless communications at an ET device, comprising: transmitting an indication of an energy transmission capability of the ET device, the energy transmission capability identifying a first quantity of energy that the ET device is able to provide to one or more energy receiver devices in a time duration of an EH procedure; receiving an energy request message indicating a time associated with the time duration to perform the EH procedure and second quantity of energy for the EH procedure for an energy receiver device, the second quantity of energy based at least in part on the first quantity of energy identified by the energy transmission capability of the ET device; and performing, in response to receiving the energy request message, the EH procedure with the energy receiver device according to the second quantity of energy.

Aspect 10: The method of aspect 9, further comprising: receiving a control signal indicating a procedure for performing a plurality of EH procedures for conflicting energy request messages.

Aspect 11: The method of aspect 10, further comprising: receiving a first energy request message for a first energy receiver device indicating a third quantity of energy and a first time duration to perform a first EH procedure; receiving a second energy request message for a second energy receiver device indicating a fourth quantity of energy and a second time duration to perform a second EH procedure, wherein the first time duration and the second time duration at least partially overlap in time; performing the first EH procedure over the first time duration with the first energy receiver device in accordance with the procedure; and performing the second EH procedure over the second time duration with the second energy receiver device in accordance with the procedure.

Aspect 12: The method of aspect 11, wherein a sum of the third quantity of energy and the fourth quantity of energy is less than or equal to the first quantity of energy, and a sum of the first time duration and the second time duration is less than or equal to the time duration.

Aspect 13: The method of any of aspects 10 through 12, wherein the procedure for performing EH procedures for conflicting energy request messages indicates to prioritize the EH procedures based at least in part on a quantity of energy requested and an associated time duration for each respective EH procedure of the plurality of EH procedures.

Aspect 14: The method of any of aspects 9 through 13, further comprising: receiving a second EH request message indicating a second time at least partially outside the time duration to perform the EH procedure.

Aspect 15: The method of aspect 14, further comprising: transmitting a message rejecting the second EH request message based at least in part on the second time being at least partially outside the time duration.

Aspect 16: The method of any of aspects 14 through 15, wherein performing in response to receiving the second EH request message a partial EH procedure in accordance with the second time being at least partially outside the time duration.

Aspect 17: The method of any of aspects 9 through 16, further comprising: receiving, from a network entity at least in part in response to the energy transmission capability, a control message identifying a configured quantity of energy for the ET device that is less than or equal to the first quantity of energy.

Aspect 18: The method of aspect 17, further comprising: receiving an update to the configured quantity of energy based at least in part on a battery status of the ET device, an operation mode of the ET device, or both.

Aspect 19: The method of any of aspects 9 through 18, wherein transmitting the indication of the energy transmission capability further comprises: transmitting an indication of a quantity of EH procedures that can be performed during the time duration and a quantity of energy for each of the quantity of EH procedures.

Aspect 20: The method of aspect 19, wherein the second quantity of energy indicated in the energy request message is based at least in part on the ET device indicating the quantity of energy for each of the quantity of EH procedures.

Aspect 21: The method of any of aspects 9 through 20, further comprising: transmitting an update to the energy transmission capability, the update changing the first quantity of energy that the ET device is able to provide to the one or more energy receiver devices in a second time duration of the EH procedure.

Aspect 22: The method of any of aspects 9 through 21, wherein the EH procedure is multiplexed with a data transmission.

Aspect 23: The method of any of aspects 9 through 22, wherein the first quantity of energy that the ET device is able to provide to the one or more energy receiver devices is based at least in part on one or more RF spectrum bands associated with the ET device, one or more carriers associated with the ET device, a waveform type used for the EH procedure, or any combination thereof.

Aspect 24: A method for wireless communications at a wireless device, comprising: receiving a first indication of a time duration for an energy receiver device to perform an EH procedure with a ET device; and receiving a second indication of a set of time offsets, each time offset of the set of time offsets associated with an operation mode of a set of operation modes of the energy receiver device.

Aspect 25: The method of aspect 24, wherein the wireless device comprises a network entity, the method further comprising: transmitting, to the ET device, the first indication and the second indication.

Aspect 26: The method of any of aspects 24 through 25, wherein the wireless device comprises the ET device, the method further comprising: performing the EH procedure during the time duration in accordance with the set of time offsets and associated operation modes of the set of operation modes.

Aspect 27: The method of any of aspects 24 through 26, wherein the wireless device comprises the ET device, the method further comprising: transmitting a message rejecting the EH procedure based at least in part on the time duration, the set of time offsets, or both, failing to satisfy a threshold.

Aspect 28: A method for wireless communications at a wireless device, comprising: receiving an indication of an energy transmission capability of an ET device, the energy transmission capability identifying a first quantity of energy that the ET device is able to provide to one or more energy receiver devices in a time duration of an EH procedure; and transmitting an energy request message indicating a time associated with the time duration to perform the EH procedure and second quantity of energy for the EH procedure for an energy receiver device, the second quantity of energy based at least in part on the first quantity of energy identified by the energy transmission capability of the ET device.

Aspect 29: The method of aspect 28, wherein the wireless device comprises the ET device, the method further comprising: performing, in response to receiving the energy request message, the EH procedure with the energy receiver device according to the second quantity of energy.

Aspect 30: The method of any of aspects 28 through 29, wherein the wireless device comprises a network entity, the method further comprising: transmitting the energy request message to the ET device.

Aspect 31: An apparatus for wireless communications at an energy receiver device, comprising a processor; memory coupled (e.g., operatively, communicatively, functionally, electronically, or electrically) with the processor; and instructions stored in the memory and executable by the processor to cause the apparatus to perform a method of any of aspects 1 through 8.

Aspect 32: An apparatus for wireless communications at an energy receiver device, comprising at least one means for performing a method of any of aspects 1 through 8.

Aspect 33: A non-transitory computer-readable medium storing code for wireless communications at an energy receiver device, the code comprising instructions executable by a processor to perform a method of any of aspects 1 through 8.

Aspect 34: An apparatus for wireless communications at an ET device, comprising a processor; memory coupled (e.g., operatively, communicatively, functionally, electronically, or electrically) with the processor; and instructions stored in the memory and executable by the processor to cause the apparatus to perform a method of any of aspects 9 through 23.

Aspect 35: An apparatus for wireless communications at an ET device, comprising at least one means for performing a method of any of aspects 9 through 23.

Aspect 36: A non-transitory computer-readable medium storing code for wireless communications at an ET device, the code comprising instructions executable by a processor to perform a method of any of aspects 9 through 23.

Aspect 37: An apparatus for wireless communications at a wireless device, comprising a processor; memory coupled (e.g., operatively, communicatively, functionally, electronically, or electrically) with the processor; and instructions stored in the memory and executable by the processor to cause the apparatus to perform a method of any of aspects 24 through 27.

Aspect 38: An apparatus for wireless communications at a wireless device, comprising at least one means for performing a method of any of aspects 24 through 27.

Aspect 39: A non-transitory computer-readable medium storing code for wireless communications at a wireless device, the code comprising instructions executable by a processor to perform a method of any of aspects 24 through 27.

Aspect 40: An apparatus for wireless communications at a wireless device, comprising a processor; memory coupled (e.g., operatively, communicatively, functionally, electronically, or electrically) with the processor; and instructions stored in the memory and executable by the processor to cause the apparatus to perform a method of any of aspects 28 through 30.

Aspect 41: An apparatus for wireless communications at a wireless device, comprising at least one means for

EP 4 642 107 A2

performing a method of any of aspects 28 through 30.

Aspect 42: A non-transitory computer-readable medium storing code for wireless communications at a wireless device, the code comprising instructions executable by a processor to perform a method of any of aspects 28 through 30.

The invention is defined in the claims. However, below there is provided a non-exhaustive list of non-limiting clauses. Any one or more of the features of these clauses may be combined with any one or more features of another clause, embodiment, example, aspect or disclosure described herein:

Clause 1. A method for wireless communications at an energy receiver device, comprising:

transmitting a first indication of a time duration for the energy receiver device to perform an energy harvesting procedure with an energy transmitter device;
transmitting a second indication of a set of time offsets, each time offset of the set of time offsets associated with an operation mode of a set of operation modes of the energy receiver device; and
performing the energy harvesting procedure during the time duration in accordance with the set of time offsets and associated operation modes of the set of operation modes.

Clause 2. The method of clause 1, further comprising:
transmitting the first indication and the second indication in one energy harvesting request message.

Clause 3. The method of clause 1, wherein transmitting the first indication of the time duration further comprises:
transmitting a time duration threshold that identifies a maximum duration of time for the energy receiver device to perform the energy harvesting procedure.

Clause 4. The method of clause 3, wherein the time duration threshold indicates a quantity of slots, minislots, symbols, subframes, frames, seconds, or any combination thereof.

Clause 5. The method of clause 1, further comprising:
retransmitting the first indication based at least in part on not receiving a response to the first indication during a configured threshold.

Clause 6. The method of clause 1, further comprising:

receiving a message indicating that the energy transmitter device rejected to perform the energy harvesting procedure; and
retransmitting the first indication of the time duration for the energy receiver device to perform the energy harvesting procedure with a second energy transmitter device in response to receiving the message.

Clause 7. The method of clause 1, further comprising:
transmitting a third indication of a first operation mode of the energy receiver device applicable at the energy receiver device before the time duration and a second operation mode applicable at the energy receiver device after the time duration.

Clause 8. The method of clause 1, further comprising:
receiving an indication of a maximum quantity of requests for the energy harvesting procedure with the energy transmitter device.

Clause 9. A method for wireless communications at an energy transmitter device, comprising:

transmitting an indication of an energy transmission capability of the energy transmitter device, the energy transmission capability identifying a first quantity of energy that the energy transmitter device is able to provide to one or more energy receiver devices in a time duration of an energy harvesting procedure;
receiving an energy request message indicating a time associated with the time duration to perform the energy harvesting procedure and second quantity of energy for the energy harvesting procedure for an energy receiver device, the second quantity of energy based at least in part on the first quantity of energy identified by the energy transmission capability of the energy transmitter device; and

performing, in response to receiving the energy request message, the energy harvesting procedure with the energy receiver device according to the second quantity of energy.

Clause 10. The method of clause 9, further comprising:
receiving a control signal indicating a procedure for performing a plurality of energy harvesting procedures for conflicting energy request messages.

Clause 11. The method of clause 10, further comprising:

receiving a first energy request message for a first energy receiver device indicating a third quantity of energy and a first time duration to perform a first energy harvesting procedure;
receiving a second energy request message for a second energy receiver device indicating a fourth quantity of energy and a second time duration to perform a second energy harvesting procedure, wherein the first time duration and the second time duration at least partially overlap in time;
performing the first energy harvesting procedure over the first time duration with the first energy receiver device in accordance with the procedure; and
performing the second energy harvesting procedure over the second time duration with the second energy receiver device in accordance with the procedure.

Clause 12. The method of clause 11, wherein a sum of the third quantity of energy and the fourth quantity of energy is less than or equal to the first quantity of energy, and a sum of the first time duration and the second time duration is less than or equal to the time duration.

Clause 13. The method of clause 10, wherein the procedure for performing the plurality of energy harvesting procedures for conflicting energy request messages indicates to prioritize the energy harvesting procedures based at least in part on a quantity of energy requested and an associated time duration for each energy harvesting procedure of the plurality of energy harvesting procedures.

Clause 14. The method of clause 9, further comprising:
receiving a second energy harvesting request message indicating a second time at least partially outside the time duration to perform the energy harvesting procedure.

Clause 15. The method clause 14, further comprising:
transmitting a message rejecting the second energy harvesting request message based at least in part on the second time being at least partially outside the time duration.

Clause 16. The method of clause 14, wherein performing in response to receiving the second energy harvesting request message a partial energy harvesting procedure in accordance with the second time being at least partially outside the time duration.

Clause 17. The method of clause 9, further comprising:
receiving, from a network entity at least in part in response to the energy transmission capability, a control message identifying a configured quantity of energy for the energy transmitter device that is less than or equal to the first quantity of energy.

Clause 18. The method of clause 17, further comprising:
receiving an update to the configured quantity of energy based at least in part on a battery status of the energy transmitter device, an operation mode of the energy transmitter device, or both.

Clause 19. The method of clause 9, wherein transmitting the indication of the energy transmission capability further comprises:
transmitting an indication of a quantity of energy harvesting procedures that can be performed during the time duration and a quantity of energy for each of the quantity of energy harvesting procedures.

Clause 20. The method of clause 19, wherein the second quantity of energy indicated in the energy request message is based at least in part on the energy transmitter device indicating the quantity of energy for each of the quantity of energy harvesting procedures.

Clause 21. The method of clause 9, further comprising:
transmitting an update to the energy transmission capability, the update changing the first quantity of energy that the energy transmitter device is able to provide to the one or more energy receiver devices in a second time duration of the energy harvesting procedure.

Clause 22. The method of clause 9, wherein the energy harvesting procedure is multiplexed with a data transmission.

Clause 23. The method of clause 9, wherein the first quantity of energy that the energy transmitter device is able to provide to the one or more energy receiver devices is based at least in part on one or more radio frequency spectrum bands associated with the energy transmitter device, one or more carriers associated with the energy transmitter device, a waveform or modulation type associated with the energy harvesting procedure, a communication duplexity type or mode associated with the energy harvesting procedure, or any combination thereof.

Clause 24. A method for wireless communications at a wireless device, comprising:

receiving a first indication of a time duration for an energy receiver device to perform an energy harvesting procedure with an energy transmitter device; and
receiving a second indication of a set of time offsets, each time offset of the set of time offsets associated with an operation mode of a set of operation modes of the energy receiver device.

Clause 25. The method of clause 24, wherein the wireless device comprises a network entity, the method further comprising:
transmitting, to the energy transmitter device, the first indication and the second indication.

Clause 26. The method of clause 24, wherein the wireless device comprises the energy transmitter device, the method further comprising:
performing the energy harvesting procedure during the time duration in accordance with the set of time offsets and associated operation modes of the set of operation modes.

Clause 27. The method of clause 24, wherein the wireless device comprises the energy transmitter device, the method further comprising:
transmitting a message rejecting the energy harvesting procedure based at least in part on the time duration, the set of time offsets, or both, failing to satisfy a threshold.

Clause 28. A method for wireless communications at a wireless device, comprising:

receiving an indication of an energy transmission capability of an energy transmitter device, the energy transmission capability identifying a first quantity of energy that the energy transmitter device is able to provide to one or more energy receiver devices in a time duration of an energy harvesting procedure; and
transmitting an energy request message indicating a time associated with the time duration to perform the energy harvesting procedure and second quantity of energy for the energy harvesting procedure for an energy receiver device, the second quantity of energy based at least in part on the first quantity of energy identified by the energy transmission capability of the energy transmitter device.

Clause 29. The method of clause 28, wherein the wireless device comprises the energy transmitter device, the method further comprising:
performing, in response to receiving the energy request message, the energy harvesting procedure with the energy receiver device according to the second quantity of energy.

Clause 30. An apparatus for wireless communication at an energy receiver device, comprising:

a processor;
memory coupled with the processor; and
instructions stored in the memory and executable by the processor to cause the apparatus to:

transmit a first indication of a time duration for the energy receiver device to perform an energy harvesting procedure with an energy transmitter device;
transmit a second indication of a set of time offsets, each time offset of the set of time offsets associated with an operation mode of a set of

operation modes of the energy receiver device; and
perform the energy harvesting procedure during the time duration in accordance with the set of time offsets and associated operation modes of the set of operation modes.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers or its sub-components) 802.11 (Wi-Fi), IEEE 802.16 (WiMAX), IEEE 802.20, Flash-OFDM, as well as other systems and radio technologies, including future systems and radio technologies, not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed using a general-purpose processor, a DSP, an ASIC, a CPU, a GPU, an FPGA or other programmable logic device, discrete gate or transistor logic, discrete hardware components, or any combination thereof designed to perform the functions described herein. A general-purpose processor may be a microprocessor but, in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented using hardware, software executed by a processor, or any combination thereof. Software shall be construed broadly to mean instructions, instruction sets, code, code segments, program code, programs, subprograms, software modules, applications, software applications, software packages, routines, subroutines, objects, executables, threads of execution, procedures, or functions, whether referred to as software, firmware, middleware, microcode, hardware description language, or otherwise. If implemented using software executed by a processor, the functions may be stored as or transmitted using one or more instructions or code of a computer-readable medium. Other examples and implementations are within the scope of the disclosure and appended claims. For example, due to the nature of software, functions described herein may be implemented using software executed by a processor, hardware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one location to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, phase change memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc. Disks may reproduce data magnetically, and discs may reproduce data optically using lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on." As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

The term "determine" or "determining" encompasses a variety of actions and, therefore, "determining" can include calculating, computing, processing, deriving, investigating, looking up (such as via looking up in a table, a database, or another data structure), ascertaining and the like. Also, "determining" can include receiving (e.g., receiving information), accessing (e.g., accessing data stored in memory) and the like. Also, "determining" can include resolving, obtaining, selecting, choosing, establishing, and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

**Claims**

1. A method (1100) for wireless communications at an energy receiver device, comprising:

   transmitting (1105) a first indication of a time duration for the energy receiver device to perform an energy harvesting procedure with an energy transmitter device;
   transmitting (1110) a second indication of a set of time offsets, each time offset of the set of time offsets associated with an operation mode of a set of operation modes of the energy receiver device; and
   performing (1115) the energy harvesting procedure during the time duration in accordance with the set of time offsets and associated operation modes of the set of operation modes.

2. The method of claim 1, further comprising:
   transmitting the first indication and the second indication in one energy harvesting request message.

3. The method of claim 1, wherein transmitting the first indication of the time duration further comprises:
   transmitting a time duration threshold that identifies a maximum duration of time for the energy receiver device to perform the energy harvesting procedure.

4. The method of claim 3, wherein the time duration threshold indicates a quantity of slots, minislots, symbols, subframes, frames, seconds, or any combination thereof.

5. The method of claim 1, further comprising:
   retransmitting the first indication based at least in part on not receiving a response to the first indication during a configured threshold.

6. The method of claim 1, further comprising:

   receiving a message indicating that the energy transmitter device rejected to perform the energy harvesting procedure; and
   retransmitting the first indication of the time duration for the energy receiver device to perform the energy harvesting procedure with a second energy transmitter device in response to receiving the message.

7. The method of claim 1, further comprising:
transmitting a third indication of a first operation mode of the energy receiver device applicable at the energy receiver device before the time duration and a second operation mode applicable at the energy receiver device after the time duration.

8. A method (1500) for wireless communications at a wireless device, comprising:

receiving (1505) a first indication of a time duration for an energy receiver device to perform an energy harvesting procedure with an energy transmitter device; and
receiving (1510) a second indication of a set of time offsets, each time offset of the set of time offsets associated with an operation mode of a set of operation modes of the energy receiver device.

9. The method of claim 8, wherein the wireless device comprises a network entity, the method further comprising:
transmitting, to the energy transmitter device, the first indication and the second indication.

10. The method of claim 8, wherein the wireless device comprises the energy transmitter device, the method further comprising:
performing the energy harvesting procedure during the time duration in accordance with the set of time offsets and associated operation modes of the set of operation modes.

11. The method of claim 8, wherein the wireless device comprises the energy transmitter device, the method further comprising:
transmitting a message rejecting the energy harvesting procedure based at least in part on the time duration, the set of time offsets, or both, failing to satisfy a threshold.

12. An apparatus for wireless communication at an energy receiver device (510), comprising:

a processor;
memory coupled with the processor; and
instructions stored in the memory and executable by the processor to cause the apparatus to:

transmit a first indication of a time duration for the energy receiver device to perform an energy harvesting procedure with an energy transmitter device (505);
transmit a second indication of a set of time offsets, each time offset of the set of time offsets associated with an operation mode of a set of operation modes of the energy receiver device; and
perform the energy harvesting procedure during the time duration in accordance with the set of time offsets and associated operation modes of the set of operation modes.

13. An apparatus for wireless communication at an energy transmitter device (505), comprising:

a processor;
memory coupled with the processor; and
instructions stored in the memory and executable by the processor to cause the apparatus to:

receive a first indication of a time duration for an energy receiver device (510) to perform an energy harvesting procedure with an energy transmitter device; and
receive a second indication of a set of time offsets, each time offset of the set of time offsets associated with an operation mode of a set of operation modes of the energy receiver device.

FIG. 1

RIC 175   SMO 180
CU 160   DU 165   RU 170

EP 4 642 107 A2

38

105-a

EH Capability
Message
220

EH Request
Message
215

EH Request
Message
215

Multi-EH Procedure
Configuration
225

EH UE

ET UE

EH Procedure
230

210

205

110-a

200

FIG. 2

FIG. 3

FIG. 4

FIG. 5

FIG. 6

| | | |
|---|---|---|
| Receiver | Communications Manager | Transmitter |

710        720        715

705

700

FIG. 7

Communications Manager

Indication Transmission
Component

825

Indication Transmission
Component

830

EH Performance Component

835

Message Reception Component

840

Indication Reception Component

845

Message Transmission
Component

850

820

Receiver

810

Transmitter

815

805

800

FIG. 8

Indication Transmission
Component

925

EH Performance Component

935

Indication Reception
Component

945

Control Signal Reception
Component

955

Indication Transmission
Component

930

Message Reception Component

940

Message Transmission
Component

950

920

900

FIG. 9

FIG. 10

Transmit a first indication of a time duration for the
energy receiver device to perform an energy harvesting
procedure with an energy transmitter device

1105

Transmit a second indication of a set of time offsets, each
time offset of the set of time offsets associated with an
operation mode of a set of operation modes of the energy
receiver device

1110

Perform the energy harvesting procedure during the time
duration in accordance with the set of time offsets and
associated operation modes of the set of operation modes

1115

1100

FIG. 11

Transmit a first indication of a time duration for the energy receiver device to perform an energy harvesting procedure with an energy transmitter device

1205

Transmit a time duration threshold that identifies a maximum duration of time for the energy receiver device to perform the energy harvesting procedure

1210

Transmit a second indication of a set of time offsets, each time offset of the set of time offsets associated with an operation mode of a set of operation modes of the energy receiver device

1215

Perform the energy harvesting procedure during the time duration in accordance with the set of time offsets and associated operation modes of the set of operation modes

1220

1200

FIG. 12

Transmit an indication of an energy transmission capability of the energy transmitter device, the energy transmission capability identifying a first quantity of energy that the energy transmitter device is able to provide to one or more energy receiver devices in a time duration of an energy harvesting procedure

1305

Receive an energy request message indicating a time of the time duration to perform the energy harvesting procedure and second quantity of energy for the energy harvesting procedure for an energy receiver device, the second quantity of energy based on the first quantity of energy identified by the energy transmission capability of the energy transmitter device

1310

Perform, in response to receiving the energy request message, the energy harvesting procedure with the energy receiver device according to the second quantity of energy

1315

1300

FIG. 13

Receive a control signal indicating a procedure for performing a plurality of energy harvesting procedures for conflicting energy request messages

⟍ 1405

Transmit an indication of an energy transmission capability of the energy transmitter device, the energy transmission capability identifying a first quantity of energy that the energy transmitter device is able to provide to one or more energy receiver devices in a time duration of an energy harvesting procedure

⟍ 1410

Receive an energy request message indicating a time of the time duration to perform the energy harvesting procedure and second quantity of energy for the energy harvesting procedure for an energy receiver device, the second quantity of energy based on the first quantity of energy identified by the energy transmission capability of the energy transmitter device

⟍ 1415

Perform, in response to receiving the energy request message, the energy harvesting procedure with the energy receiver device according to the second quantity of energy

⟍ 1420

⟍ 1400

FIG. 14

Receive a first indication of a time duration for an energy receiver device to perform an energy harvesting procedure with a energy transmitter device

1505

Receive a second indication of a set of time offsets, each time offset of the set of time offsets associated with an operation mode of a set of operation modes of the energy receiver device

1510

1500

FIG. 15

Receive a first indication of a time duration for an energy receiver device to perform an energy harvesting procedure with a energy transmitter device

1605

Receive a second indication of a set of time offsets, each time offset of the set of time offsets associated with an operation mode of a set of operation modes of the energy receiver device

1610

Perform the energy harvesting procedure during the time duration in accordance with the set of time offsets and associated operation modes of the set of operation modes

1615

1600

FIG. 16

Receive an indication of an energy transmission capability of an energy transmitter device, the energy transmission capability identifying a first quantity of energy that the energy transmitter device is able to provide to one or more energy receiver devices in a time duration of an energy harvesting procedure

1705

Transmit an energy request message indicating a time associated with the time duration to perform the energy harvesting procedure and second quantity of energy for the energy harvesting procedure for an energy receiver device, the second quantity of energy based at least in part on the first quantity of energy identified by the energy transmission capability of the energy transmitter device

1710

1700

## FIG. 17

Receive an indication of an energy transmission capability of an energy transmitter device, the energy transmission capability identifying a first quantity of energy that the energy transmitter device is able to provide to one or more energy receiver devices in a time duration of an energy harvesting procedure

1805

Transmit an energy request message indicating a time associated with the time duration to perform the energy harvesting procedure and second quantity of energy for the energy harvesting procedure for an energy receiver device, the second quantity of energy based at least in part on the first quantity of energy identified by the energy transmission capability of the energy transmitter device

1810

Perform, in response to receiving the energy request message, the energy harvesting procedure with the energy receiver device according to the second quantity of energy

1815

1800

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GR 20220100609, ELSHAFIE